(19) Europäisches Patentamt / European Patent Office / Office européen des brevets

(11) **EP 3 306 829 B1**

(12) **EUROPEAN PATENT SPECIFICATION**

(45) Date of publication and mention of the grant of the patent:
**28.08.2019 Bulletin 2019/35**

(51) Int Cl.:
***H04B 7/0452*** *(2017.01)*

(21) Application number: **16192879.1**

(22) Date of filing: **07.10.2016**

(54) **METHOD FOR TRANSMITTING DATA VIA A MIMO CHANNEL-BASED WIRELESS COMMUNICATION SYSTEM**

VERFAHREN ZUR ÜBERTRAGUNG VON DATEN ÜBER EIN MIMO-KANAL-BASIERTES DRAHTLOSKOMMUNIKATIONSSYSTEM

PROCÉDÉ DE TRANSMISSION DE DONNÉES PAR UN SYSTÈME DE COMMUNICATION SANS FIL BASÉ SUR UN CANAL MIMO

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**11.04.2018 Bulletin 2018/15**

(73) Proprietors:
- **Mitsubishi Electric R&D Centre Europe B.V.**
  **1119 NS Schiphol Rijk (NL)**
  Designated Contracting States:
  **FR**
- **Mitsubishi Electric Corporation**
  **Tokyo 100-8310 (JP)**
  Designated Contracting States:
  **AL AT BE BG CH CY CZ DE DK EE ES FI GB GR HR HU IE IS IT LI LT LU LV MC MK MT NL NO PL PT RO RS SE SI SK SM TR**

(72) Inventors:
- **LI, Qianrui**
  **35708 Rennes Cedex 7 (FR)**
- **GRESSET, Nicolas**
  **35708 Rennes Cedex 7 (FR)**
- **GESBERT, David**
  **06330 Roquefort Les Pins (FR)**

(74) Representative: **Cabinet Le Guen Maillet**
**3, impasse de la Vigie**
**CS 71840**
**35418 Saint-Malo Cedex (FR)**

(56) References cited:
- **DE KERRET PAUL ET AL: "Quantized Team Precoding: A robust approach for network MIMO under general CSI uncertainties", 2016 IEEE 17TH INTERNATIONAL WORKSHOP ON SIGNAL PROCESSING ADVANCES IN WIRELESS COMMUNICATIONS (SPAWC), IEEE, 3 July 2016 (2016-07-03), pages 1-5, XP032939994, DOI: 10.1109/SPAWC.2016.7536751 [retrieved on 2016-08-09]**
- **RICHARD FRITZSCHE ET AL: "Robust sum rate maximization in the multi-cell MU-MIMO downlink", 2013 IEEE WIRELESS COMMUNICATIONS AND NETWORKING CONFERENCE (WCNC), 5 April 2013 (2013-04-05), pages 3180-3184, XP055344204, DOI: 10.1109/WCNC.2013.6555071 ISBN: 978-1-4673-5937-5**
- **GESBERT D ET AL: "Shifting the MIMO Paradigm", IEEE SIGNAL PROCESSING MAGAZINE, IEEE SERVICE CENTER, PISCATAWAY, NJ, US, vol. 24, no. 5, 5 September 2007 (2007-09-05), pages 36-46, XP011194352, ISSN: 1053-5888, DOI: 10.1109/MSP.2007.904815**
- **LI QIANRUI ET AL: "Robust regularized ZF in decentralized Broadcast Channel with correlated CSI noise", 2015 53RD ANNUAL ALLERTON CONFERENCE ON COMMUNICATION, CONTROL, AND COMPUTING (ALLERTON), IEEE, 29 September 2015 (2015-09-29), pages 329-336, XP032889679, DOI: 10.1109/ALLERTON.2015.7447023 [retrieved on 2016-04-04]**

**Description**

The present invention generally relates to determining, in a distributed fashion, precoders to be applied for transmitting data between a plurality of transmitters and a plurality of receivers in a MIMO channel-based wireless communication system.

Wireless communication systems may rely on cooperation in order to improve their performance with regard to their environment. According to one example, such cooperation can be found in a context of a MIMO (*Multiple-Input Multiple-Output*) channel-based communications network in which node devices, typically access points such as base stations or eNodeBs, cooperate in order to improve overall robustness of communications via the MIMO channel.

So as to perform such cooperation, transmitters of a considered wireless communication system rely on CSI (Channel State Information) related data and/or channel estimation related data for determining a precoder to be applied by said transmitters in order to improve performance of transmissions via the MIMO channel from said transmitters to a predefined set of receivers. Such a precoder is typically determined in a central fashion, and parameters of the determined precoder are then propagated toward said transmitters for further applying said determined precoder during transmissions via the MIMO channel from said transmitters to said receivers.

It would be advantageous, in terms of system architecture and in terms of balance of processing resources usage, to provide a method for enabling determining the precoder parameters in a distributed fashion among the transmitters. However, doing so, CSIT (CSI at Transmitter) mismatch generally appears. This may involve a significant divergence between the precoder parameters computed by the transmitters on their own. The performance enhancement targeted by the cooperation is therefore not as high as expected, since the precoder parameters independently determined by the transmitters involve residual interference that grows with the CSIT mismatch.

The document ("Quantized Team Precoding: A Robust Approach for Network MIMO under General CSI Uncertainties", P. de Kerret et al, July 3rd, 2016, IEEE 17th annual workshop on Signal Processing Advances in Wireless Communications, discloses a team precoding approach that relies on quantizing CSI space.

The document "Robust Sum Rate Maximization in the Multi-cell MU-MIMO downlink", R. Fritzsche et al, 2013, IEEE Wireless Communications and Networking Conference, discloses linear precoding for multi-cell multi-user MIMO downlink by maximizing weighted sum rate under imperfect CSI conditions.

The document *"Shifting the MIMO Paradigm"*, D. Gesbert et al, 2007, IEEE Signal Processing Magazine, vol. 224, n° 5, discloses quantization-based techniques for determining precoders with partial channel knowledge at transmitters, as well as dimension reduction and projection techniques.

The document "Robust Regularized ZF in Decentralized Broadcast Channel with Correlated CSI Noise", Q. Li et al, 2015, 53rd Annual Allerton Conference on Communication, Control and Computing, discloses Distributed Channel State Information Broadcast Channel setting, in which various transmitters compute precoder elements based on their individual estimates of a global multi-user channel matrix.

It is desirable to overcome the aforementioned drawbacks of the prior art. It is more particularly desirable to provide a solution that allows improving performance of transmissions from a predefined set of transmitters toward a predefined set of receivers in a MIMO-channel based wireless communication system by relying on a precoder determined in a distributed fashion among said transmitters, although CSIT mismatch may exist.

To that end, the present invention concerns a method for performing transmissions of data between a plurality of $K_t$ transmitters and a plurality of $K_r$ receivers via a global MIMO channel $H = [H_1, ..., H_{K_r}]$ of a wireless communication system, by determining in a distributed fashion precoders to be applied for performing said transmissions, said precoders being respectively applied by said transmitters and jointly forming an overall precoder $V$, wherein each and every $j$-th transmitter among said plurality of $K_t$ transmitters performs: gathering long-term statistics of Channel State Information at Transmitter CSIT errors incurred by each one of the $K_t$ transmitters with respect to the global MIMO channel $H$, the long-term statistics describing the random variation of the CSIT errors; obtaining short-term CSIT related data and building its own view $\hat{H}^{(j)}$ of the global MIMO channel $H$; determining an estimate $\tilde{V}^{(j)}$ of the overall precoder $V$ from the obtained short-term CSIT related data; refining the estimate $\tilde{V}^{(j)} = \left[ \tilde{V}_1^{(j)}, ..., \tilde{V}_{K_r}^{(j)} \right]$ of the overall precoder $V$ on the basis of the gathered long-term statistics of CSIT errors so as to obtain a refined precoder $V^{(j)} = \left[ V_1^{(j)}, ..., V_{K_r}^{(j)} \right]$ that is a view of the overall precoder $V$ from the standpoint of said $j$-th transmitter, further on the basis of its own view $\hat{H}^{(j)}$ of the global MIMO channel $H$, and further on the basis of a figure of merit representative of performance of said transmissions via the global MIMO channel $H$; and transmitting the data by applying a precoder that is formed by a part of the refined precoder $V^{(j)}$ which relates to said $j$-th transmitter among said plurality of $K_t$ transmitters.

Thus, performance of transmissions via the global MIMO channel of the wireless communication system is improved by relying on a precoder determined in a distributed fashion, although CSIT mismatch may exist. Robustness against CSIT mismatch is thus achieved without needing a central unit to compute the precoder.

According to a particular feature, the figure of merit is a lower bound of a sum rate $LBSR^{(j)}$ reached via the global MIMO channel $H$, from the standpoint of said $j$-th transmitter with respect to its own view $\hat{H}^{(j)}$ of the global MIMO channel $H$, as follows:

$$LBSR^{(j)} = \sum_{k=1}^{K_r} log \left| det \left( EMSE_k^{(j)}(F_1^{(j)}, \dots, F_{K_r}^{(j)}) \right)^{-1} \right|$$

wherein

$$EMSE_k^{(j)}\left(F_1^{(j)}, \dots, F_{K_r}^{(j)}\right) = \mathbb{E}_{\left\{\Delta^{(1)}, \Delta^{(2)}, \dots, \Delta^{(K_t)} | \hat{H}^{(j)}\right\}}\left[MSE_k^{(j)}\left(F_1^{(j)}, \dots, F_{K_r}^{(j)}\right)\right]$$

wherein $F_k^{(j)}$, $k = 1$ to $K_r$ are refinement matrices, and wherein $\mathbb{E}$ represents the mathematical expectation and, wherein $MSE_k^{(j)}\left(F_1^{(j)}, \dots, F_{K_r}^{(j)}\right)$ represents mean square error matrix between the data to be transmitted and a corresponding filtered received vector for a realization of estimate errors $\Delta^{(1)}$, $\Delta^{(2)}$, ..., $^{(K_t)}$ which matches the long terms statistics of CSIT errors.

Thus, the sum of the rate of the receivers served by said transmissions is improved by the determined precoder.

According to a particular feature, the figure of merit is the sum of traces $MINMSE^{(j)}$, for $k = 1$ to $K_r$, of $EMSE_k^{(j)}\left(F_1^{(j)}, \dots, F_{K_r}^{(j)}\right)$, as follows:

$$MINMSE^{(j)} = \sum_{k=1}^{K_r} Trace(EMSE_k^{(j)}(F_1^{(j)}, \dots, F_{K_r}^{(j)}))$$

wherein

$$EMSE_k^{(j)}\left(F_1^{(j)}, \dots, F_{K_r}^{(j)}\right) = \mathbb{E}_{\left\{\Delta^{(1)}, \Delta^{(2)}, \dots, \Delta^{(K_t)} | \hat{H}^{(j)}\right\}}\left[MSE_k^{(j)}\left(F_1^{(j)}, \dots, F_{K_r}^{(j)}\right)\right]$$

wherein $F_k^{(j)}$, $k = 1$ to $K_r$ are refinement matrices, and wherein $\mathbb{E}$ represents the mathematical expectation and, wherein $MSE_k^{(j)}\left(F_1^{(j)}, \dots, F_{K_r}^{(j)}\right)$ represents the mean square error matrix between the data to be transmitted and a corresponding filtered received vector for a realization of estimate errors $\Delta^{(1)}$, $\Delta^{(2)}$, ..., $\Delta^{(K_t)}$ which matches the long terms statistics of CSIT errors.

Thus, the average mean square error, as perceived by the receivers is improved by the determined precoder.

According to a particular feature, refining the estimate $\tilde{V}^{(j)}$ of the overall precoder $V$ is performed thanks to a refinement function $f(.,.)$, as well as a set $\left\{F_k^{(j)}\right\}$ of refinement matrices $F_k^{(j)}$, $k = 1$ to $K_r$, in a multiplicative refinement strategy, as follows:

$$V_k^{(j)} = f\left(\tilde{V}_k^{(j)}, F_k^{(j)}\right) = \tilde{V}_k^{(j)} F_k^{(j)}$$

Thus, such a multiplicative refinement allows for correcting CSIT mismatch, especially in the context of block diagonalization precoding.

According to a particular feature, the overall precoder *V* is a block-diagonalization precoder, the transmitters have cumulatively at least as many antennas as the receivers, and refining the estimate $\tilde{V}^{(j)}$ of the overall precoder *V* thus consists in optimizing the set $\left\{ F_k^{(j)} \right\}$ of the refinement matrices $F_k^{(j)}$ with respect to the set $\left\{ \tilde{V}_k^{(j)} \right\}$ of the matrices $\tilde{V}_k^{(j)}$, which is obtained by applying a Singular Value Decomposition operation as follows:

$$\widehat{H}_{[k]}^{(j)} = U_{[k]}^{(j)} \left[ D_{[k]}^{(j)}, 0 \right] \left[ \tilde{V}'^{(j)}_{[k]}, \tilde{V}''^{(j)}_{k} \right]^{\dagger}$$

wherein $\widehat{H}_{[k]}^{(j)}$ represents a view of an aggregated interference channel estimation $\widehat{H}_{[k]}$ for the *k-th* receiver among the $K_r$ receivers from the standpoint of said *j*-th transmitter, with

$$H_{[k]} = \left[ H_1^{\dagger}, \dots, H_{k-1}^{\dagger}, H_{k+1}^{\dagger}, \dots, H_{K_r}^{\dagger} \right]^{\dagger}$$

wherein $\tilde{V}_k^{(j)}$ is obtained by selecting, according to a predefined selection rule similarly applied by any and all transmitters, a predetermined set of *N* columns of the matrix $\tilde{V}''^{(j)}_{k}$ resulting from the Singular Value Decomposition operation, wherein each receiver has a quantity *N* of receive antennas.

Thus, a distributed block diagonal precoder is made robust to CSIT mismatch.

According to a particular feature, the overall precoder *V* is an interference aware coordinated beamforming precoder with block-diagonal shape, $K_t = K_r$, and each transmitter has as a quantity *M* of transmit antennas equal to a quantity *N* of receive antennas of each receiver, each transmitter communicates only with a single receiver among the $K_r$ receivers such that *k = j*,

wherein a sub-matrix $W_k'$ such that:

$$V_k = E_k W_k'$$

is computed as the eigenvector beamforming of the channel matrix defined by $E_k^T \widehat{H}^{(k)} E_k$, from a Singular Value Decomposition operation applied onto said channel matrix defined by $E_k^T \widehat{H}^{(k)} E_k$ as follows:

$$E_k^T \widehat{H}^{(k)} E_k = U_k' D_k' W_k'$$

wherein $E_k$ is defined as follows:

$$E_k = \left[ 0_{M \times (k-1)M}, I_{M \times M}, 0_{M \times (K_t - k)M} \right]^T$$

with $0_{M \times (k-1)M}$ an $M \times (k$ - 1$)M$ sub-matrix containing only zeros, $0_{M \times (K_t-k)M}$ an $M \times (K_t$ - 1$)M$ sub-matrix containing only zeros, and $I_{M \times M}$ an $M \times M$ identity sub-matrix.

Thus, a distributed coordinated beamforming precoder is made robust to CSIT mismatch.

According to a particular feature, refining the estimate $\tilde{V}^{(j)}$ of the overall precoder *V* is performed thanks to a refinement function $f(.,.)$, as well as a set $\left\{F_k^{(j)}\right\}$ of refinement matrices $F_k^{(j)}$, $k = 1$ to $K_r$, in an additive refinement strategy, as follows:

$$V_k^{(j)} = f\left(\tilde{V}_k^{(j)}, F_k^{(j)}\right) = \tilde{V}_k^{(j)} + F_k^{(j)}$$

Thus, an additive refinement allows for correcting CSIT mismatch, especially in the context of regularized zeros forcing precoders.

According to a particular feature, the overall precoder $V$ is a regularized zero-forcing precoder, and the estimate $\tilde{V}^{(j)}$ of the overall precoder $V$ can be expressed as follows :

$$\tilde{V}_k^{(j)} = \left(\widehat{H}^{(j)\dagger}\widehat{H}^{(j)} + \alpha^{(j)}I\right)^{-1}\widehat{H}_k^{(j)\dagger}$$

wherein $\alpha^{(j)}$ is a scalar representing a regularization coefficient that is optimized according to statistics of the own view $\hat{H}^{(j)}$ of the global MIMO channel $H$ from the standpoint of said $j$-th transmitter, and wherein $\alpha^{(j)}$ is shared by said $j$-th transmitter with the other transmitters among the $K_t$ transmitters.

Thus, a Regularized Zero Forcing precoder is made robust to CSIT mismatch.

According to a particular feature, refining the estimate $\tilde{V}^{(j)}$ of the overall precoder $V$ is performed under the following power constraint:

$$Trace\left(\left(f\left(\tilde{V}_k^{(j)}, F_k^{(j)}\right)\right)^{\dagger} f\left(\tilde{V}_k^{(j)}, F_k^{(j)}\right)\right) = N$$

wherein $f(.,.)$ is a refinement function and $F_k^{(j)}$, $k = 1$ to $K_r$ are refinement matrices, and wherein each receiver has a quantity $N$ of receive antennas.

Thus, transmission power is restrained.

The present invention also concerns a device for performing transmissions of data between a plurality of $K_t$ transmitters and a plurality of $K_r$ receivers via a global MIMO channel $H = [H_1,..., H_{K_r}]$ of a wireless communication system, by determining in a distributed fashion precoders to be applied for performing said transmissions, said precoders being respectively applied by said transmitters and jointly forming an overall precoder $V$, wherein said device is each and every $j$-th transmitter among said plurality of $K_t$ transmitters and comprises: means for gathering long-term statistics of Channel State Information at Transmitter CSIT errors incurred by each one of the $K_t$ transmitters with respect to the global MIMO channel $H$, the long-term statistics describing the random variation of the CSIT errors; means for obtaining short-term CSIT related data and building its own view $\hat{H}^{(j)}$ of the global MIMO channel $H$; means for determining an estimate $\tilde{V}^{(j)}$ of the overall precoder $V$ from the obtained short-term CSIT related data; means for refining the estimate

$$\tilde{V}^{(j)} = \left[\tilde{V}_1^{(j)}, ..., \tilde{V}_{K_r}^{(j)}\right]$$

of the overall precoder $V$ on the basis of the gathered long-term statistics of CSIT errors so

$$V^{(j)} = \left[V_1^{(j)}, ..., V_{K_r}^{(j)}\right]$$

as to obtain a refined precoder that is a view of the overall precoder $V$ from the standpoint of said $j$-th transmitter, further on the basis of its own view $\hat{H}^{(j)}$ of the global MIMO channel $H$, and further on the basis of a figure of merit representative of performance of said transmissions via the global MIMO channel $H$; and means for transmitting the data by applying a precoder that is formed by a part of the refined precoder $V^{(j)}$ which relates to said $j$-th transmitter among said plurality of $K_t$ transmitters.

The present invention also concerns a computer program that can be downloaded from a communications network and/or stored on a medium that can be read by a computer or processing device. This computer program comprises instructions for causing implementation of the aforementioned method, when said program is run by a processor. The present invention also concerns an information storage medium, storing a computer program comprising a set of instructions causing implementation of the aforementioned method, when the stored information is read from said information storage medium and run by a processor.

Since the features and advantages related to the communications system and to the computer program are identical to those already mentioned with regard to the corresponding aforementioned method, they are not repeated here.

The characteristics of the invention will emerge more clearly from a reading of the following description of an example of embodiment, said description being produced with reference to the accompanying drawings, among which:

Fig. 1 schematically represents a wireless communication system in which the present invention may be implemented;

Fig. 2 schematically represents an example of hardware architecture of a communication device, as used in the wireless communication system;

Fig. 3 schematically represents an algorithm for determining, in a distributed fashion, precoders to be applied for transmitting data from a plurality of transmitters toward a plurality of receivers in the wireless communication system; and

Fig. 4 schematically represents an iterative algorithm for determining refinement matrices used to refine the precoders.

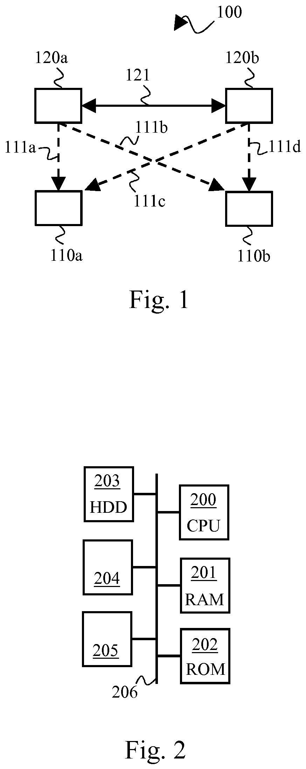

**Fig. 1** schematically represents a wireless communication system 100 in which the present invention may be implemented.

The wireless communication system 100 comprises a plurality of transmitters, two 120a, 120b of which being represented in Fig. 1. The wireless communication system 100 further comprises a plurality of receivers, two 110a, 110b of which being represented in Fig. 1. For instance, the transmitters 120a, 120b are access points or base stations of a wireless telecommunications network, and the receivers 110a, 110b are mobile terminals having access to the wireless telecommunications network via said access points or base stations.

The transmitters 120a, 120b cooperate with each other in order to improve performance when performing transmissions from the plurality of transmitters 120a, 120b toward the plurality of receivers 110a, 110b via wireless links 111a, 111b, 111c, 111d. The wireless link 111a represents the transmission channel from the transmitter 120a to the receiver 110a, the wireless link 111b represents the transmission channel from the transmitter 120a to the receiver 110b, the wireless link 111c represents the transmission channel from the transmitter 120b to the receiver 110a, and the wireless link 111d represents the transmission channel from the transmitter 120b to the receiver 110b. The transmitters 120a, 120b are interconnected, as shown by a link 121 in Fig. 1A, so as to be able to exchange long-term statistics about transmission channel observations. The link 121 can be wired or wireless.

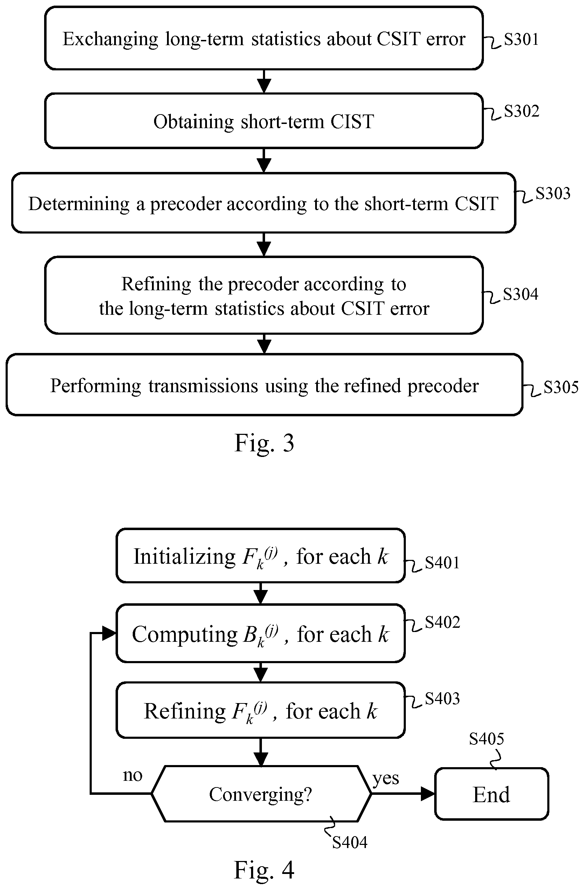

The cooperation is achieved by making the transmitters 120a, 120b apply respective precoders when performing said transmissions. Said precoders are determined in a distributed fashion within the wireless communication system so that each transmitter determines the precoder that said transmitter has to apply in the scope of said transmissions. More particularly, each transmitter (identified by an index $j$ among the plurality of transmitters) determines, independently from the other transmitters of said plurality, its own view $V^{(j)}$ of an overall precoder $V$ that should be cooperatively applied by said plurality of transmitters for performing said transmissions. This aspect is detailed hereafter with respect to Fig. 3.

Herein the quantity of transmitters 120a, 120b in use is denoted $K_t$, each transmitter having a quantity $M$ of transmit antennas, and the quantity of receivers 110a, 110b in use is denoted $K_r$, each receiver having a quantity $N$ of receive antennas. The receivers 110a, 110b are configured to simultaneously receive signals from plural transmitters among the $K_t$ transmitters. A global MIMO channel $H$ is thus created between the $K_t$ transmitters and the $K_r$ receivers. The part of the global MIMO channel $H$ which links a $j$-$th$ transmitter among the $K_t$ transmitters to a $k$-$th$ receiver among the $K_r$ receivers is represented by an $N$ x $M$ matrix herein denoted $H_{k,j}$. One can note that $H_{k,j}$ is representative a MIMO channel too. The part of the global MIMO channel $H$ that links the $K_t$ transmitters to the $k$-$th$ receiver among the $K_r$ receivers is a concatenation of the $K_t$ MIMO channels $H_{k,j}$, with $j$ = 1 to $K_t$, and is therefore an $N$ x $MK_t$ matrix herein denoted $H_k$. One can further note that $H_k$ is representative of a MIMO channel too.

Let's consider a set of symbol vectors $s_k$. Each symbol vector $s_k$ of length $N$ represents the data that has to be transmitted to the $k$-th receiver among the plurality of $K_r$ receivers, at a given instant. Let's further denote s the stacked vector $s = \left[ s_1^T, s_1^T, \ldots, s_{K_r}^T \right]^T$ that contains all data to be transmitted by the $K_t$ transmitters to the $K_r$ receivers at said given instant, wherein $A^T$ represents the transpose of a vector or matrix $A$.

Let's further consider the following overall precoder $V$:

$$V = \left[ V_1, \ldots, V_{K_r} \right]$$

and further define $E_j^T V$, with $j$ = 1 to $K_t$, as the part of the overall precoder $V$ to be applied by the *j-th* transmitter among the $K_t$ transmitters, wherein $E_j$ is an $M \times NK_r$ matrix such that $E_j = [0_{M \times (j-1)M}, I_{M \times M}, 0_{M \times (K_t-j)M}]^T$, and wherein $V_k$, with $k$ = 1 to $K_r$, is the equivalent part of the overall precoder $V$ which has to be applied to reach the *k-th* receiver among the $K_r$ receivers. Inline with the notations already defined hereinbefore, one should note that $V_k^{(j)}$ represents hereinafter the view of the precoder equivalent part $V_k$ from the standpoint of the *j-th* transmitter among the $K_t$ transmitters.

It should be noted that $0_{M \times (j-1)M}$ in the expression of $E_j$ above represents an $M \times (j - 1)M$ sub-matrix of $E_j$ containing only zeros, $0_{M \times (K_t-j)M}$ represents an $M \times (K_t - j)M$ sub-matrix of $E_j$ containing only zeros, and $I_{M \times M}$ represents an $M \times M$ identity sub-matrix (could be an $M \times M$ identity matrix in other contexts herein).

In a joint processing CoMP (Coordinated Multipoint Transmission) approach, any and all transmitters know entirely the set of the symbol vectors $s_k$ to be transmitted toward the $K_r$ receivers at a given instant.

In a coordinated precoding approach where $K_t = K_r$, each transmitter among the $K_t$ transmitters communicates with one receiver among the $K_r$ receivers. It means that the *j-th* transmitter among the $K_t$ transmitters only has to know the symbol vector $s_k$ to be transmitted to the *k-th* receiver (with $k = j$) among the $K_r$ receivers with which said *j-th* transmitter communicates, which implies that the overall precoder $V$ has a block-diagonal shape. In the case where each and every *j-th* transmitter among the $K_t$ transmitters has to communicates with the *k-th* receiver among the $K_r$ receivers in such a way that $k \neq j$, reordering of the $K_t$ transmitters with respect to the index $j$ and/or of the $K_r$ receivers with respect to the index $k$ is performed so as to make the overall precoder $V$ have a block-diagonal shape.

Considering the statements here above, a model of the wireless communication system 100 can be expressed as follows:

$$y_k = H_k V s + n_k = H_k V_k s_k + \sum_{\ell=1, \ell \neq k}^{K_r} H_k V_\ell s_\ell + n_k$$

wherein:

- $y_k$ represents a symbol vector as received by the *k-th* receiver among the $K_r$ receivers when the symbol vector $s_k$ has been transmitted to said *k-th* receiver; and
- $n_k$ represents an additive noise incurred by said *k-th* receiver during the transmission of the symbol vector $s_k$.

It can be noticed that, in the formula above, the term $H_k V_k s_k$ represents the useful signal from the standpoint of the *k-th* receiver among the $K_r$ receivers and the sum of the terms $H_k V_\ell s_\ell$ represents interference incurred by the *k-th* receiver among the $K_r$ receivers during the transmission of the symbol vector $s_k$.

A receive filter can be computed from the channel knowledge $H_k V$ by the *k-th* receiver among the $K_r$ receivers, which may be obtained by a direct estimation if pilots precoded according to the overall precoder $V$ are sent by the concerned transmitter(s) among the $K_t$ transmitters, or by obtaining the overall precoder $V$ by signalling from the concerned transmitter(s) among the $K_t$ transmitters and further by estimating the MIMO channel $H_k$ from pilots sent without precoding on this MIMO channel $H_k$.

When using a Zero-Forcing receive filter, the *k-th* receiver among the $K_r$ receivers uses a linear filter $T_k$ defined as follows:

$$T_k = ((H_k V)^\dagger H_k V)^{-1} (H_k V)^\dagger$$

When using an MMSE receive filter, the *k-th* receiver among the $K_r$ receivers uses a linear filter $T_k$ defined as follows:

$$T_k = ((H_k V)^\dagger H_k V + I)^{-1} (H_k V)^\dagger$$

Then, a decision is made by said *k-th* receiver on the filtered received vector $T_k y_k$ for estimating the symbol vector $s_k$.

It has to be noted that, in the case where there is no effective receive filter (for instance when Regularized Zero Forcing is applied by the transmitters), $T_k = I$.

The $K_t$ transmitters are configured to obtain CSIT (Channel State Information at the Transmitter). CSIT is obtained by each transmitter among the $K_t$ transmitters from:

- feedback CSI (Channel State Information) from one more receivers among the $K_r$ receivers, and/or
- channel estimation performed at said transmitter and using a channel reciprocity property, and/or
- from such CSI or such channel estimation provided by one or more other transmitters among the $K_t$ transmitters,

in such a way that CSI related data and/or channel estimation related data propagation rules within the wireless communication system 100 lead to CSIT errors and moreover to CSIT mismatch among the $K_t$ transmitters (*i.e.* different CSIT from the respective standpoints of the $K_t$ transmitters), for example due to quantization operations.

One can note that, in addition to quantization operations, disparities in CSI related data effectively received by the $K_t$ transmitters imply that differences in CSIT exist from one transmitter to another among the $K_t$ transmitters, which leads to CSIT mismatch.

The global MIMO channel *H* can thus be expressed as follows, considering each and every *j*-th transmitter among the $K_t$ transmitters:

$$H = \widehat{H}^{(j)} + \Delta^{(j)}$$

wherein $\hat{H}^{(j)}$ represents a view of the global MIMO channel *H* from the standpoint of *the j-th* transmitter among the $K_t$ transmitters, which is obtained by said *j-th* transmitter from the CSIT obtained by said *j-th* transmitter, and wherein $\Delta^{(j)}$ represents an estimate error between the effective global MIMO channel *H* and said view $\hat{H}^{(j)}$ of the global MIMO channel *H* from the standpoint of said *j-th* transmitter. In a similar manner, $\widehat{H}_{k,i}^{(j)}$ denotes the view of the MIMO channel $H_{k,i}$ from the standpoint of said *j-th* transmitter and $\widehat{H}_k^{(j)}$ denotes the view of the MIMO channel $H_k$ from the standpoint of said *j-th* transmitter.

Therefore, the view $V^{(j)}$ of the overall precoder *V* might then be slightly different from one transmitter to another among the $K_t$ transmitters, due to the CSIT mismatch. The *j*-th transmitter among the $K_t$ transmitters then extracts, from the view $V^{(j)}$ of the overall precoder *V* which has been determined by said *j*-th transmitter, the precoder $E_j^T V^{(j)}$ that said transmitter has to apply in the scope of said transmissions. As already mentioned, this is independently performed by each transmitter among the $K_t$ transmitters ($j = 1$ to $K_t$). Optimization is therefore adequately performed so as to improve the performance of the transmissions from the $K_t$ transmitters to the $K_r$ receivers, in spite of the CSIT mismatch and despite that each *j*-th transmitter among the $K_t$ transmitters independently determines the precoder $E_j^T V^{(j)}$ that said transmitter has to apply. This aspect is detailed hereafter with regard to Fig. 3.

**Fig. 2** schematically represents an example of hardware architecture of a communication device, as used in the wireless communication system 100. The hardware architecture illustratively shown in Fig. 2 can represent each transmitter 120a, 120b of the wireless communication system 100 and/or each receiver 110a, 110b of the wireless communication system 100.

According to the shown architecture, the communication device comprises the following components interconnected by a communications bus 206: a processor, microprocessor, microcontroller or CPU (Central Processing Unit) 200; a RAM (Random-Access Memory) 201; a ROM (Read-Only Memory) 202; an SD (Secure Digital) card reader 203, or an HDD (Hard Disk Drive) or any other device adapted to read information stored on a storage medium; a first communication interface 204 and potentially a second communication interface 205.

When the communication device is one receiver among the $K_r$ receivers, the first communication interface 204 enables the communication device to receive data from the $K_t$ transmitters via the global MIMO channel *H*. The second communication interface 205 is not necessary in this case. The first communication interface 204 further enables the communication device to feed back channel state information to one or more transmitter devices among the $K_t$ transmitters.

When the communication device is one transmitter among the $K_t$ transmitters, the first communication interface 204 enables the communication device to transmit data to the $K_r$ receivers, via the global MIMO channel *H,* cooperatively with the other transmitters among the $K_t$ transmitters. The first communication interface 204 further enables the communication device to receive channel state information fed back by one or more receivers among the $K_r$ receivers. Moreover, the second communication interface 205 enables the communication device to exchange data with one or more other transmitters among the $K_t$ transmitters.

CPU 200 is capable of executing instructions loaded into RAM 201 from ROM 202 or from an external memory, such as an SD card. After the communication device has been powered on, CPU 200 is capable of reading instructions from RAM 201 and executing these instructions. The instructions form one computer program that causes CPU 200 to perform some or all of the steps of the algorithm described herein.

Any and all steps of the algorithms described herein may be implemented in software by execution of a set of instructions or program by a programmable computing machine, such as a PC (Personal Computer), a DSP (Digital Signal Processor) or a microcontroller; or else implemented in hardware by a machine or a dedicated component, such as an FPGA (Field-Programmable Gate Array) or an ASIC (Application-Specific Integrated Circuit).

**Fig. 3** schematically represents an algorithm for determining, in a distributed fashion within the wireless communication system 100, estimations of the overall precoder $V$ to be applied for transmitting data from the plurality of transmitters 120a, 120b toward the plurality of receivers 110a, 110b. The algorithm shown in Fig. 3 is independently performed by each transmitter among the $K_t$ transmitters. Let's illustratively consider that the algorithm of Fig. 3 is performed by the transmitter 120a, which is considered as the $j\text{-}th$ transmitter among the $K_t$ transmitters.

In a first step S301, the transmitter 120a gathers long-term statistics about the CSIT errors incurred by each one of the $K_t$ transmitters with respect to the global MIMO channel $H$. The long terms statistics describe the random variation of the CSIT errors, which can for example be the variance of the CSIT errors.

By using a given statistical model of the CSIT errors, for example a centred Gaussian distribution, realizations of CSIT errors can be generated from the gathered long-term statistics for simulating the impact of said CSIT errors. Analytical derivation based on said statistical model and parameterized by said gathered long-term statistics can be performed.

For instance, each $j$-th transmitter among the $K_t$ transmitters estimates or computes a variance matrix $\Sigma_{k,i}^{(j)}$ associated with the channel estimation error between the MIMO channel estimation $\widehat{H}_{k,i}^{(j)}$ and the effective MIMO channel $H_{k,i}$, defined as follows: each coefficient of the variance matrix $\Sigma_{k,i}^{(j)}$ is the variance of the error between the corresponding coefficient of the MIMO channel matrices $\widehat{H}_{k,i}^{(j)}$ and $H_{k,i}$. It has to be noted that in this case the channel estimation error is assumed to be independent from one channel coefficient to another. In a variant, a covariance matrix of the vectorization of the difference (on a per-coefficient basis) $\widehat{H}_{k,i}^{(j)} - H_{k,i}$ between the MIMO channel matrices $\widehat{H}_{k,i}^{(j)}$ and $H_{k,i}$ is estimated or computed.

When there is no exchange of CSIT information between the transmitters, $\hat{H}^{(j)}$ represents an estimation, by the $j$-th transmitter among the $K_t$ transmitters, of the global MIMO channel $H$. Said long term statistics are representative of the error on the CSIT, which can be computed according to a known behaviour divergence of the channel estimation technique in use with respect to the effective considered MIMO channel and according to the effective CSI feedback from the concerned receiver(s) to said $j$-th transmitter. For example, when pilot symbols are sent in downlink for allowing each $k$-th receiver among the $K_r$ receivers to estimate the MIMO channel $H_k$, the resulting estimation error is proportional to the signal to noise plus interference ratio via said MIMO channel $H_k$, and the corresponding coefficient of proportionality may be computed from the pilot density, such as in the document "Optimum pilot pattern for channel estimation in OFDM systems", Ji-Woong Choi et al, in IEEE Transactions on Wireless Communications, vol. 4, no. 5, pp. 2083-2088, Sept. 2005. This allows computing statistics relative to the downlink channel estimation error. When channel reciprocity is considered, each $j$-th transmitter among the $K_t$ transmitters can learn the CSIT from a channel estimation in uplink direction, similar technique as in downlink is used to compute the uplink channel estimation error statistics. When a feedback link is used for obtaining the CSIT at the transmitter from a CSI feedback computed from a channel estimation made by the concerned receiver(s), quantization error statistics on CSI can be estimated in the long term by the concerned receiver(s) and fed back to said $j$-th transmitter, or said quantization error statistics on CSI can be deduced from analytical models. Indeed, each concerned receiver knows the effective CSI as well as the quantization function, thus the effective quantization error. Said receiver is then able to compute the quantization error statistics over time and is then able to feed them back to said $j$-th transmitter. For example, the receiver builds an histogram of the quantization error representing the distribution of the quantization error and feeds it back to the $j$-th transmitter. For example, the receiver and transmitters assume that the quantization error is multivariate Gaussian distributed, and the receiver estimates the mean vector and the covariance variance which are fed back to the $j$-th transmitter. Any of the above techniques can be combined to obtain said CSIT error statistics associated to the estimation $\hat{H}^{(j)}$ of the global MIMO channel $H$ from the standpoint of the $j$-th transmitter. Then these long-term statistics can be exchanged between the transmitters, in such a way that each $j$-th transmitter among the $K_t$ transmitters gathers long-term statistics about the CSIT errors incurred by each one of the $K_t$ transmitters with respect to the global MIMO channel $H$ (which means that all the $K_t$ transmitters share the same long-term statistics).

In another example said long-term statistics are gathered as disclosed in the document "A cooperative channel estimation approach for coordinated multipoint transmission networks", Qianrui Li et al, IEEE International Conference on Communication Workshop (ICCW), pp.94-99, 8-12 June 2015, where a combination of channel estimates is performed between transmitter nodes in order to compute the estimation $\widehat{H}_{k,i}^{(j)}$ by each $j$-th transmitter among the $K_t$ transmitters, of the MIMO channel $H_{k,i}$, and the combination is then optimized to minimize the mean square error associated with the difference (on a per-coefficient basis) $\widehat{H}_{k,i}^{(j)} - H_{k,i}$ between the MIMO channel matrices $\widehat{H}_{k,i}^{(j)}$ and $H_{k,i}$. The variance matrices $\Sigma_{k,i}^{(j)}$ are thus the result of the combination method described in said document.

Thus, in a particular embodiment, the transmitter 120a gathers the variance matrices $\Sigma_{k,i}^{(j)}$ which entries are the variance of the entries of the estimate error $\Delta_{k,i}^{(j)}$ between the effective MIMO channel $H_{k,i}$ and the estimation $\widehat{H}_{k,i}^{(j)}$ of the MIMO channel $H_{k,i}$ from the standpoint of the $j$-th transmitter among the $K_t$ transmitters.

Once the step S301 has been performed by each one of the $K_t$ transmitters, all the $K_t$ transmitters share the same long-term statistics about the CSIT errors. The step S301 is performed in an independent process than the process typically in charge of effectively configuring the $K_t$ transmitters so as to transmit the aforementioned set of the symbols vectors $s_k$.

It can be noted that since the aforementioned statistics about the CSIT errors are by definition long-term data, the latency for ensuring that each one of the $K_t$ transmitters receives said long-term statistics has low importance. Quantization is typically not a limiting factor for transmitting such long-term statistics. On the contrary, the latency for propagating data used by the $K_t$ transmitters so that each transmitter among the $K_t$ transmitters is able to build its own CSIT is of most importance, in order for the wireless communication system 100 to have good reactivity. Quantization with few levels can then be necessary for transmitting such CIST related data and can drastically reduce the quality of the information. By the way, confusion shall be avoided between long-term statistics about CSIT errors received by the transmitter 120a in the step S301 and CSIT related data needed by the transmitter 120a to have its own view $\hat{H}^{(j)}$ of the global MIMO channel $H$.

In a step S302, the transmitter 120a obtains up-to-date (*i.e.* short-term) CSIT related data needed by the transmitter 120a to have its own view $\hat{H}^{(j)}$ of the global MIMO channel $H$. The transmitter 120a preferably shares the CSIT obtained in the step S302 with one or more transmitters among the $K_t$ transmitters, in order to help said one or more transmitters to build their own respective view of the global MIMO channel $H$.

Once the step S302 is performed by all the $K_t$ transmitters independently (substantially in parallel), the CSIT finally obtained by the $K_t$ transmitters differs from one transmitter to another one among the $K_t$ transmitters, which leads to CSIT mismatch.

In a step S303, the transmitter 120a determines an initial version $\tilde{V}^{(j)}$, from the standpoint of the transmitter 120a (considered as *the j-th* transmitter among the $K_t$ transmitters), of the overall precoder $V$ from the CSIT related data obtained by the transmitter 120a in the step S302. The initial version $\tilde{V}^{(j)}$ of the overall precoder $V$ is therefore an estimate of the overall precoder $V$. Since there is CSIT mismatch, this initial version $\tilde{V}^{(j)}$ of the overall precoder $V$ may involve residual interference that grows with the CSIT mismatch.

In a particular embodiment, the type of the overall precoder $V$ and thus of the estimate $\tilde{V}^{(j)}$ of the overall precoder $V$ are both of one precoder type among the followings:

- block-diagonalization precoders, for coordinated multi-point transmissions with joint processing, as addressed in the document "Cooperative Multi-Cell Block Diagonalization with Per-Base-Station Power Constraints", Rui Zhang, in IEEE Journal on Selected Areas in Communications, vol. 28, no. 9, pp. 1435-1445, December 2010;
- interference aware coordinated beamforming precoders, for coordinated multi-point transmissions with coordinated precoding, as addressed in the document "Interference Aware-Coordinated Beamforming in a Multi-Cell System", Chan-Byoung Chae et al, in IEEE Transactions on Wireless Communications, vol. 11, no. 10, pp. 3692-3703, October 2012; and
- regularized zero-forcing precoders, for coordinated multi-point transmissions with joint processing, as addressed in the document "A large system analysis of cooperative multicell downlink system with imperfect CSIT", Jun Zhang et al, in IEEE International Conference on Communications (ICC), pp.4813-4817, 10-15 June 2012.

A particular embodiment of the present invention for each one of these types of precoders is detailed hereafter.

It has to be noted that the initial version $\tilde{V}^{(j)}$ of the overall precoder V from the CSIT related data obtained by the transmitter 120a (considered as the *j-th* transmitter among the $K_t$ transmitters) can be determined as indicated in the documents referenced above with respect to each precoder type.

In a step S304, the transmitter 120a refines the initial version $\tilde{V}^{(j)}$ of the overall precoder V according to the CSI error long-term statistics obtained in the step S301, so as to obtain a refined precoder $V^{(j)} = \left[ V_1^{\overline{(j)}}, \ldots, V_{K_r}^{(j)} \right]$, which is the view of the overall precoder V from the standpoint of the transmitter 120a (considered as the *j*-th transmitter among the $K_t$ transmitters).

In a particular embodiment, refining the initial version $\tilde{V}^{(j)}$ of the overall precoder V is performed by the transmitter 120a thanks to a refinement function f(.,.), as well as a set $\left\{ F_k^{(j)} \right\}$ of refinement matrices $F_k^{(j)}$, k = 1 to $K_r$. More particularly, considering that $\tilde{V}^{(j)} = \left[ \tilde{V}_1^{(j)}, \ldots, \tilde{V}_{K_r}^{(j)} \right]$, refining the initial version $\tilde{V}^{(j)}$ of the overall precoder V means refining the sub-matrices $\tilde{V}_k^{(j)}$, k = 1 to $K_r$, of the initial version $\tilde{V}^{(j)}$ of the overall precoder V, wherein each sub-matrix $\tilde{V}_k^{(j)}$ is the equivalent within $\tilde{V}^{(j)}$ of the sub-matrix $V_k^{(j)}$ within $V^{(j)}$.

Therefore, for each sub-matrix $\tilde{V}_k^{(j)}$, the refinement function f(.,.) and the refinement matrix $F_k^{(j)}$ can be applied in a multiplicative refinement strategy, such as:

$$ V_k^{(j)} = f\left( \tilde{V}_k^{(j)}, F_k^{(j)} \right) = \tilde{V}_k^{(j)} F_k^{(j)} $$

or in an additive refinement strategy:

$$ V_k^{(j)} = f\left( \tilde{V}_k^{(j)}, F_k^{(j)} \right) = \tilde{V}_k^{(j)} + F_k^{(j)} $$

preferably under the following power constraint:

$$ Trace\left( \left( f\left( \tilde{V}_k^{(j)}, F_k^{(j)} \right) \right)^{\dagger} f\left( \tilde{V}_k^{(j)}, F_k^{(j)} \right) \right) = N $$

It has to be noticed from the relationships above that the size of each refinement matrix $F_k^{(j)}$ depends on whether the refinement strategy is additive or multiplicative.

Refining the initial version $\tilde{V}^{(j)}$ of the overall precoder V is further performed as a function of the view $\hat{H}^{(j)}$ of the global MIMO channel H from the standpoint of the transmitter 120a (considered as the *j*-th transmitter among the $K_t$ transmitters), as well as of a figure of merit representative of performance of transmissions from the transmitters to the receivers via the global MIMO channel H, so as to be able to determine optimized version of the set $\left\{ F_k^{(j)} \right\}$ of the refinement matrices $F_k^{(j)}$, k = 1 to $K_r$. In such a wireless communication system, the figure of merit that is representative of performance of the transmissions via the global MIMO channel H is typically a multi-user performance metric.

It has to be noted that the precoder $\tilde{V}^{(j)}$ being a refined version of the initial version $\tilde{V}^{(j)}$ of the overall precoder V from the standpoint of each *j*-th transmitter among the $K_t$ transmitters computed from its own view $\hat{H}^{(j)}$ of the global MIMO channel H, a mismatch exists between the precoders $V^{(j)}$ independently computed by all the $K_t$ transmitters. Thus, a refinement operation should be designed so as to minimize the impact of the mismatch on the performance characterized by the figure of merit. It can be noted that the transmitters have two types of information for designing the precoder $V^{(j)}$: first, the local CSIT, which is represented by the view $\hat{H}^{(j)}$ of the global MIMO channel H from the standpoint of each *j*-th transmitter, and which is exploited to compute the initial version $\tilde{V}^{(j)}$ of the overall precoder V, and the long term statistics on estimate error between the effective global MIMO channel $H$ and said view $\hat{H}^{(j)}$, which are shared between all transmitters and can thus be exploited for said refinement operation. Since a statistics-based refinement is considered, the refinement operation is a statistical method that computes a refined precoder $V^{(j)}$ out of a set of intermediate random variable $\hat{V}^{(j)}$ characterizing the possible overall precoder $V$ in view of the previously determined initial version $\tilde{V}^{(j)}$ of the overall precoder $V$ and of the long term statistics on estimate error between the effective global MIMO channel $H$ and said view $\hat{H}^{(j)}$ for each $j$-th transmitter. Furthermore, the refinement strategy (multiplicative or additive) can be defined in order to be able to statistically correct the initial version $\tilde{V}^{(j)}$ into $V^{(j)}$, said refinement strategy involving parameters to be optimized so as to statistically reduce the impact of the mismatch on the performance.

Thus, each $j$-th transmitter can compute the distribution of an intermediate random variable $\tilde{V}^{(j)}$ (as defined hereafter), or generate realizations thereof, associated with the overall precoder $V$ after refinement by all the transmitters, according to the refinement strategy (multiplicative or additive) in use and to the gathered long-term statistics about the CSIT errors, further according to the initial version $\tilde{V}^{(j)}$ of the overall precoder $V$ from the standpoint of said $j$-th transmitter and of it own view $\hat{H}^{(j)}$ of the global MIMO channel $H,$ as detailed hereafter.

In a first particular embodiment, the figure of merit is a lower bound of a sum rate $LBSR^{(j)}$ reached via the global MIMO channel $H,$ from the standpoint of the transmitter 120a (considered as *the $j$-th* transmitter among the $K_t$ transmitters), with respect to its own view $\hat{H}^{(j)}$ of the global MIMO channel $H$. The sum rate lower bound $LBSR^{(j)}$ is a function of the set $\left\{ F_k^{(j)} \right\}$. Considering that the transmitter 120a views the global MIMO channel $H$ as being $\hat{H}^{(j)}$, the sum rate lower bound $LBSR^{(j)}$ is then defined as follows:

$$LBSR^{(j)} = \sum_{k=1}^{K_r} log \left| det\left( EMSE_k^{(j)}(F_1^{(j)}, ..., F_{K_r}^{(j)}) \right)^{-1} \right|$$

wherein

$$EMSE_k^{(j)}\left( F_1^{(j)}, ..., F_{K_r}^{(j)} \right) = \mathbb{E}_{\left\{ \Delta^{(1)}, \Delta^{(2)}, ..., \Delta^{(K_t)} | \hat{H}^{(j)} \right\}} \left[ MSE_k^{(j)}\left( F_1^{(j)}, ..., F_{K_r}^{(j)} \right) \right]$$

wherein $\mathbb{E}$ represents the mathematical expectation and, wherein $MSE_k^{(j)}\left( F_1^{(j)}, ..., F_{K_r}^{(j)} \right)$ represents the mean square error matrix between the symbol vector $s_k$ and the corresponding filtered received vector $T_k y_k$ (as already explained) for a realization of the estimate errors $\Delta^{(1)}, \Delta^{(2)}, ..., \Delta^{(K_t)}$ which matches the long terms statistics of CSIT error as obtained in the step S301, for example by considering a centred Gaussian distribution of the CSIT errors, and for the view $\hat{H}^{(j)}$ of the global MIMO channel $H$ from the standpoint of the transmitter 120a. As explained in more details hereafter, computing $MSE_k^{(j)}$ for all and any $k$-th receiver among the $K_r$ receivers would allow each considered $j$-th transmitter among the $(K_t)$ transmitters to perform the optimization of the considered figure of merit. However, the effective realization of the estimate errors $\Delta^{(1)}, \Delta^{(2)}, ..., \Delta^{(K_t)}$ is unknown. An approximation is therefore performed by relying on $EMSE_k^{(j)}$ instead of $MSE_k^{(j)}$ thanks to the use of the long-term statistics about the CSIT errors, which have been gathered in the step S301.

The receiver filter $T_k$ may be a function of the overall precoder $V$ and of the global MIMO channel $H,$ which are unknown at the transmitters. But, each $j$-th transmitter can instead rely on its own view $\hat{H}^{(j)}$ of the global MIMO channel $H$ and realizations of the estimate errors $\Delta^{(1)}, \Delta^{(2)}, , \Delta^{(K_t)}$ matching the long-term statistics gathered in the step S301, so as to obtain the intermediate random variable $\tilde{V}^{(j)}$ and to obtain its own view $T_k^{(j)}$ of each receive filter $T_k$, $k = 1$ to $K_r$, as described hereafter. As a remark, the intermediate random variable $\hat{V}^{(j)}$ and the view $T_k^{(j)}$ of the receive filter $T_k$ are

functions of the set $\left\{F_k^{(j)}\right\}$ of the refinement matrices $F_k^{(j)}$, $k = 1$ to $K_r$.

Since $EMSE_k^{(j)}\left(F_1^{(j)}, ..., F_{K_r}^{(j)}\right)$ may be computed for a fixed set of parameters $F_1^{(j)}, ..., F_{K_r}^{(j)}$, the sum rate lower bound $LBSR^{(j)}$ may be optimized by randomly defining several candidate sets of matrices to form the set $\left\{F_k^{(j)}\right\}$ of the refinement matrices $F_k^{(j)}$, $k = 1$ to $K_r$, and keeping the candidate set that minimizes the sum rate lower bound $LBSR^{(j)}$ from the standpoint of the transmitter 120a.

In a preferred embodiment, an optimized sum rate lower bound $LBSR^{(j)}$ is obtained thanks to an iterative algorithm as detailed hereafter with regard to Fig. 4.

In a second particular embodiment, the figure of merit is the sum of traces, for $k = 1$ to $K_r$, of

$EMSE_k^{(j)}\left(F_1^{(j)}, ..., F_{K_r}^{(j)}\right),$ as follows, which leads to a simplified expression $MINMSE^{(j)}$ thus involving simpler implementation:

$$MINMSE^{(j)} = \sum_{k=1}^{K_r} Trace(EMSE_k^{(j)}(F_1^{(j)}, ..., F_{K_r}^{(j)}))$$

Therefore, optimization of a figure of merit being a function of $EMSE_k^{(j)}$, such as the sum rate lower bound $LBSR^{(j)}$ or the simplified expression $MINMSE^{(j)}$, according to the mathematical expectation of the realization of the estimate errors $\Delta^{(1)}, \Delta^{(2)}, ... , \Delta^{(K_t)}$, which matches the long terms statistics of CSIT error as obtained in the step S301, leads to obtaining the appropriate set $\left\{F_k^{(j)}\right\}$ of the refinement matrices $F_k^{(j)}$, $k = 1$ to $K_r$, and then to obtaining the refined precoder $V^{(j)}$ from said appropriate set $\left\{F_k^{(j)}\right\}$ of the refinement matrices $F_k^{(j)}$ (by applying the relevant additive or multiplicative refinement strategy).

In a step S305, the transmitter 120a performs, cooperatively with the other transmitters of the $K_t$ transmitters, the transmission of the set of the symbol vectors $s_k$ toward the $K_r$ receivers. To do so, the transmitter 120a applies the precoder $E_j^T V^{(j)}$.

The algorithm of Fig. 3 may be applied independently by all the transmitters on a regular basis. The algorithm of Fig. 3 may be applied independently by all the transmitters upon detecting that the global MIMO channel $H$ has changed beyond a predefined threshold. The algorithm of Fig. 3 may be applied independently by all the transmitters before each transmission of data from the $K_t$ transmitters toward the $K_r$ receivers.

**Particular embodiment for block-diagonalization precoders**

In this particular embodiment, the overall precoder $V$ is a block-diagonalization precoder. It is then assumed that $K_t M \geq K_r N$. By definition of block-diagonalization, considering the *k-th* receiver among the $K_r$ receivers, the interference induced by the MIMO channels for all other receivers among the $K_r$ receivers is supposed to be eliminated, which means that, ideally:

$$H_k V_\ell = 0, \forall \ell \neq k$$

Let's denote $H_{[k]}$ an aggregated interference channel for the *k-th* receiver among the $K_r$ receivers, which is expressed as follows:

$$H_{[k]} = \left[H_1^\dagger, ..., H_{k-1}^\dagger, H_{k+1}^\dagger, ..., H_{K_r}^\dagger\right]^\dagger$$

and similarly $\hat{H}_{[k]}$ an aggregated interference channel estimation for the *k-th* receiver among the $K_r$ receivers, which is expressed as follows:

$$\widehat{H}_{[k]} = \left[\widehat{H}_1^{\dagger}, \dots, \widehat{H}_{k-1}^{\dagger}, \widehat{H}_{k+1}^{\dagger}, \dots, \widehat{H}_{K_r}^{\dagger}\right]^{\dagger}$$

Applying a Singular Value Decomposition (SVD) operation on the expression above of the aggregated interference channel $H_{[k]}$ results in:

$$H_{[k]} = U_{[k]}\left[D_{[k]}, 0\right]\left[V'_{[k]}, V''_k\right]^{\dagger}$$

wherein:

- $U_{[k]}$ is an $N(K_r - 1)$ x $N(K_r - 1)$ unitary matrix,
- $D_{[k]}$ is an $N(K_r - 1)$ x $N(K_r - 1)$ diagonal matrix,
- $V'_{[k]}$ is an $MK_t$ x $N(K_r - 1)$ matrix, and
- $V''_k$ is an $MK_t$ x $MK_t$-$N(K_r - 1)$ matrix.

The size of the part $V_k$ of the overall precoder $V$ which has to be applied for transmitting data toward the *k-th* receiver is $MK_t$ x $N$, and $V_k$ is obtained by selecting a predetermined set of $N$ columns of the matrix $V''_k$. The predetermined set can either be, according to a predefined selection rule, the $N$ first columns of $V''_k$ or the $N$ last columns of $V''_k$.
Considering the view $\hat{H}^{(j)}$ of the global MIMO channel $H$ from the standpoint of the *j-th* transmitter among the $K_t$ transmitters, the expression above becomes:

$$\widehat{H}_{[k]}^{(j)} = U_{[k]}^{(j)}\left[D_{[k]}^{(j)}, 0\right]\left[\tilde{V}'^{(j)}_{[k]}, \tilde{V}''^{(j)}_{k}\right]^{\dagger}$$

wherein $\widehat{H}_{[k]}^{(j)}$ represents the view of the aggregated interference channel estimation $\hat{H}_{[k]}$ for the *k-th* receiver among the $K_r$ receivers from the standpoint of the *j*-th transmitter among the $K_t$ transmitters,

wherein $\tilde{V}'^{(j)}_{[k]}$ is an $MK_t$ x $N(K_r - 1)$ matrix equivalent to $V'_{[k]}$ when using the estimation $\hat{H}^{(j)}$ instead of the effective global MIMO channel $H$ and $\tilde{V}''^{(j)}_{k}$ is an $MK_t$ x $MK_t$-$N(K_r - 1)$ matrix equivalent to $V''_k$ when using the estimation $\hat{H}^{(j)}$ instead of the effective global MIMO channel $H$,

and wherein $\tilde{V}_k^{(j)}$ is obtained by selecting a predetermined set of $N$ columns of the matrix $\tilde{V}''^{(j)}_{k}$ according to the predefined selection rule, the selection rule being similarly applied by any and all transmitters, and wherein $\tilde{V}_k^{(j)}$ is such that the refinement function *f(.,.)* is used in the aforementioned multiplicative refinement strategy, which means:

$$V_k^{(j)} = \tilde{V}_k^{(j)} F_k^{(j)}$$

where $F_k^{(j)}$ is a $N$ x $N$ matrix, preferably under the following constraint:

$$Trace\left(F_k^{(j)\dagger} F_k^{(j)}\right) = N$$

As a result of the precoding strategy, the block-diagonalization property is conserved, which means:

$$\widehat{H}_k^{(j)} V_\ell^{(j)} = 0, \forall \ell \neq k$$

However, it has to be noted that the block-diagonalization property is usually not achieved during the transmission on the global MIMO channel $H$, since a mismatch exists between $\hat{H}^{(j)}$ and $H$. Thus, if the transmitters use their initial version $\tilde{V}^{(j)}$ of the precoder for performing the transmissions, interference exists between the transmissions towards the receivers. This interference can be reduced by using the statistical knowledge on the long term statistics on estimate error between the effective global MIMO channel $H$ and said view $\hat{H}^{(j)}$, by using the appropriate (multiplicative or additive) refinement strategy.

Therefore, by applying an SVD operation on the view $\hat{H}^{(j)}$ of the global MIMO channel $H$ from the standpoint of the transmitter 120a (considered as the *j-th* transmitter among the $K_t$ transmitters), the matrices $\tilde{V}'^{(j)}_{[k]}$ and $\tilde{V}_k^{(j)}$ can be determined by the transmitter 120a (considered as the *j-th* transmitter among the $K_t$ transmitters).

Refining the initial version $\tilde{V}^{(j)}$ of the overall precoder $V$ thus consists in optimizing the set $\left\{ F_k^{(j)} \right\}$ of the refinement matrices $F_k^{(j)}$ with respect to the set $\left\{ \tilde{V}_k^{(j)} \right\}$ of the matrices $\tilde{V}_k^{(j)}$ obtained by the application of the Singular Value Decomposition on the view $\hat{H}^{(j)}$ of the global MIMO channel $H$ from the standpoint of the transmitter 120a (considered as the *j-th* transmitter among the $K_t$ transmitters).

First, a system performance metric is derived for a fixed realization of the estimate errors $\Delta^{(1)}, \Delta^{(2)}, ..., \Delta^{(K_t)}$ known by the transmitters, and then a statistical analysis on the estimate errors $\Delta^{(1)}, \Delta^{(2)}, ..., \Delta^{(K_t)}$, which are random variables, is applied according to their respective long term statistics gathered at the step S301.

Considering that an MMSE filter is implemented at each one of the $K_r$ receivers for filtering signals received from the $K_t$ transmitters, the expression of the MMSE filter, as computed at the *k*-th receiver from the perspective of the *j*-th transmitter and for a fixed realization of the estimate errors $\Delta^{(1)}, \Delta^{(2)}, ..., \Delta^{(K_t)}$ is:

$$T_k^{(j)} = (\widehat{V}_k^{(j)})^\dagger (\widehat{H}_k^{(j)} + \Delta_k^{(j)})^\dagger \left( \sum_{\ell=1}^{K_r} (\widehat{H}_k^{(j)} + \Delta_k^{(j)}) \widehat{V}_\ell^{(j)} (\widehat{V}_\ell^{(j)})^\dagger (\widehat{H}_k^{(j)} + \Delta_k^{(j)})^\dagger + I \right)^{-1}$$

wherein $\widehat{V}_k^{(j)}$ is the part of the intermediate random variable $\hat{V}^{(j)}$ which concerns the *k*-th receiver among the $K_r$ receivers, by taking into account that the other transmitters among the $K_t$ transmitters also have performed a refinement according to a fixed realization of the estimate errors $\Delta^{(1)}, \Delta^{(2)}, ..., \Delta^{(K_t)}$.

Therefore, each *j-th* transmitter among the $K_t$ transmitters computes the following, for each and every $\ell$-th receiver among the $K_r$ ($\ell = 1$ to $K_r$):

$$\widehat{V}_\ell^{(j)} = \begin{bmatrix} E_1^\dagger \left( V_\ell^{(j)} + \left( \widehat{H}_{[\ell]}^{(j)} \right)^+ \left( \Delta_{[\ell]}^{(1)} - \Delta_{[\ell]}^{(j)} \right) V_\ell^{(j)} \right) \\ E_2^\dagger \left( V_\ell^{(j)} + \left( \widehat{H}_{[\ell]}^{(j)} \right)^+ \left( \Delta_{[\ell]}^{(2)} - \Delta_{[\ell]}^{(j)} \right) V_\ell^{(j)} \right) \\ \vdots \\ E_{K_t}^\dagger \left( V_\ell^{(j)} + \left( \widehat{H}_{[\ell]}^{(j)} \right)^+ \left( \Delta_{[\ell]}^{(K_t)} - \Delta_{[\ell]}^{(j)} \right) V_\ell^{(j)} \right) \end{bmatrix}$$

and wherein $\Delta_\ell^{(j)}$ represents the error estimation for the considered $\ell$-th receiver from the standpoint of the considered *j*-th transmitter, and

$$\Delta_{[\ell]}^{(j)} = \left[\Delta_1^{(j)\dagger}, \dots, \Delta_{\ell-1}^{(j)\dagger}, \Delta_{\ell+1}^{(j)\dagger}, \dots, \Delta_{K_r}^{(j)\dagger}\right]^{\dagger}$$

and $\widehat{H}_\ell^{(j)}$ represents the view of the MIMO channel $H_\ell$ from the standpoint of the considered $j$-th transmitter, and $\widehat{H}_{[\ell]}^{(j)}$ represents an estimation of the aggregated interference channel $H_{[\ell]}$ for the considered $\ell$-th receiver from the standpoint of the considered $j$-th transmitter.

Indeed, it is reminded that:

$$H = \widehat{H}^{(j)} + \Delta^{(j)}$$

which then means that, when a fixed realization of the estimate errors $\Delta^{(1)}, \Delta^{(2)}, \dots, \Delta^{(K_t)}$ is known by the considered $j$-th transmitter, said $j$-th transmitter can compute the view $\widehat{H}^{(j')}$ of the global MIMO channel $H$ from the standpoint of any other $j'$-th transmitter among the $K_t$ transmitters as follows:

$$\widehat{H}^{(j')} = \widehat{H}^{(j)} + \Delta^{(j)} - \Delta^{(j')}$$

Thus computing $\widehat{V}_\ell^{(j)}$, $\ell = 1$ to $K_r$, as expressed above, allows then computing $T_k^{(j)}$, which then allows defining $MSE_k^{(j)}$ as follows:

$$MSE_k^{(j)} = \mathbb{E}_{s_k, n_k}\left[(s_k - T_k^{(j)} y_k)(s_k - T_k^{(j)} y_k)^{\dagger}\right]$$

$$= (I - T_k^{(j)}(\widehat{H}_k^{(j)} + \Delta_k^{(j)})\widehat{V}_k^{(j)})(I - T_k^{(j)}(\widehat{H}_k^{(j)} + \Delta_k^{(j)})\widehat{V}_k^{(j)})^{\dagger} + T_k^{(j)}(T_k^{(j)})^{\dagger}$$

$$+ T_k^{(j)}(\widehat{H}_k^{(j)} + \Delta_k^{(j)}) \sum_{\ell \neq k} \widehat{V}_\ell^{(j)}(\widehat{V}_\ell^{(j)})^{\dagger}(\widehat{H}_k^{(j)} + \Delta_k^{(j)})^{\dagger}(T_k^{(j)})^{\dagger}$$

wherein I is an identity matrix.

Since the effective fixed realization of the estimate errors $\Delta^{(1)}, \Delta^{(2)}, \dots, \Delta^{(K_t)}$ is unknown at the transmitters in practice, but since the estimate errors $\Delta^{(1)}, \Delta^{(2)}, \dots, \Delta^{(K_t)}$ are associated with a given probability of occurrence that can be computed from the long term statistics on CSIT error gathered in the step S301, a statistical analysis can be used.

Each $j$-th transmitter (such as the transmitter 120a) is then able to compute $EMSE_k^{(j)}(F_1^{(j)}, \dots, F_{K_r}^{(j)})$ by using a Monte Carlo simulation, or by using a numerical integration, on the distribution of $\Delta^{(1)}, \Delta^{(2)}, \dots, \Delta^{(K_t)}$ in view of the long term statistics on CSIT error gathered in the step S301, further with respect to the view $\widehat{H}^{(j)}$ of the global MIMO channel $H$ from the standpoint of the transmitter 120a (considered as the $j$-th transmitter among the $K_t$ transmitters).

Alternatively a mathematical approximation provides a closed form expression of $EMSE_k^{(j)}(F_1^{(j)}, \dots, F_{K_r}^{(j)})$, as follows:

$$EMSE_k^{(j)}(F_1^{(j)}, \dots, F_{K_r}^{(j)}) = \left(I + (\widehat{H}_k^{(j)} \tilde{V}_k^{(j)} F_k^{(j)})^{\dagger}\right.$$

$$\times \left.\left(\sum_{\ell=1, \ell \neq k}^{K_r} \widehat{H}_k^{(j)} \tilde{V}_\ell^{(j)} F_\ell^{(j)}(\widehat{H}_k^{(j)} \tilde{V}_\ell^{(j)} F_\ell^{(j)})^{\dagger} + I + \Phi_k^{(j)}\right)^{-1} \widehat{H}_k^{(j)} \tilde{V}_k^{(j)} F_k^{(j)}\right)^{-1}$$

wherein

$$\Phi_k^{(j)} = \sum_{\ell=1}^{K_r} \sum_{\substack{t=1 \\ t\neq j}}^{K_t} \widehat{H}_k^{(j)} E_t E_t^\dagger \widehat{H}_{[\ell]}^{(j)+} [\Theta_{[\ell]}^{(j)(t)} \left(\widehat{H}_{[\ell]}^{(j)+}\right)^\dagger E_t E_t^\dagger$$

$$+ \Theta_{[\ell]}^{(j)(j)} \left(\widehat{H}_{[\ell]}^{(j)+}\right)^\dagger \sum_{\substack{t'=1 \\ t'\neq j}}^{K_t} E_{t'} E_{t'}^\dagger] \widehat{H}_k^{(j)\dagger}$$

$$+mdiag\left(\sum_{t=1,t\neq j}^{K_t} \Sigma_k^{(t)} E_t \ diag\left(\sum_{i=1}^{K_r} E_t^\dagger \widehat{H}_{[\ell]}^{(j)+}(\Theta_{[\ell]}^{(j)(t)} + \Theta_{[\ell]}^{(j)(j)})(\widehat{H}_{[\ell]}^{(j)+})^\dagger E_t\right)\right)$$

$$+mdiag\left(\Sigma_k^{(j)} diag\left(\sum_{\ell=1}^{K_r} \tilde{V}_\ell^{(j)} F_\ell^{(j)} (\tilde{V}_\ell^{(j)} F_\ell^{(j)})^\dagger\right)\right)$$

wherein

$$\Theta_{[\ell]}^{(j)(t)} = mdiag\left(\Sigma_{[\ell]}^{(t)} diag\left(\tilde{V}_\ell^{(j)} F_\ell^{(j)} (\tilde{V}_\ell^{(j)} F_\ell^{(j)})^\dagger\right)\right)$$

and

$$\Sigma_k^{(j)} = \left[\Sigma_{k,1}^{(j)} \ , \dots \ , \Sigma_{k,K_t}^{(j)}\right]$$

and

$$\Sigma_{[k]}^{(t)} = \left[(\Sigma_1^{(t)})^\dagger \ , \dots, \ (\Sigma_{k-1}^{(t)})^\dagger, \ (\Sigma_{k+1}^{(t)})^\dagger \ , \dots, \ (\Sigma_{K_r}^{(t)})^\dagger\right]^\dagger$$

and wherein $A^+$ is the Moore-Penrose pseudo-inverse of A, *mdiag*(.) makes a diagonal matrix from a given vector and *diag*(.) retrieves the diagonal entries of a matrix and stacks them into a vector.

Therefore, optimization of a figure of merit being a function of $EMSE_k^{(j)}$, such as the sum rate lower bound *LBSR(j)* or the simplified expression *MINMSE(j)*, according to the mathematical expectation of the realization of the estimate errors $\Delta^{(1)}$, $\Delta^{(2)}$, ..., $\Delta^{(K_t)}$ which matches the long-term statistics of CSIT error as obtained in the step S301, leads to obtaining the appropriate set $\{F_k^{(j)}\}$ of the refinement matrices $F_k^{(j)}$, $k = 1$ to $K_p$ and then to obtaining the refined precoder *V(j)* from said appropriate set $\{F_k^{(j)}\}$ of the refinement matrices $F_k^{(j)}$ by applying the aforementioned multiplicative refinement strategy.

In a preferred embodiment, an optimized sum rate lower bound *LBSR(j)* is obtained thanks to the iterative algorithm as detailed hereafter with regard to Fig. 4.

**Particular embodiment for interference aware coordinated beamforming precoders**

In this particular embodiment, it is assumed that the quantity $K_t$ of transmitters is equal to the quantity $K_r$ of receivers, *i.e.* $K_t = K_r$, and that the quantity $M$ of transmit antennas is equal to the quantity $N$ of receive antennas, *i.e.* $M = N$. Moreover each one of the $K_t$ transmitters communicates only with a single receiver among the $K_r$ receivers. Considering any $k$-th receiver among the $K_r$ receivers, the $j$-th transmitter among the $K_t$ transmitters which communicates with said $k$-th receiver is such that $k = j$. In the mathematical expressions used hereafter in the particular embodiment for interference aware coordinated beamforming precoders, the index $k$ (only used hereinbefore for identifying any receiver among the $K_r$ receivers) can be used instead of the index $j$. Interference aware coordinated beamforming precoding is a sub-case of the block-diagonalization precoding detailed above. Indeed, by considering that the overall precoder $V$ has a block diagonal structure, with $K_t$ blocks of size $M$, it is considered that each and every $k$-th transmitter among the $K_t$ transmitters only knows the symbol vector $s_k$ (and not the other symbol vectors $s_\ell$, $\ell \neq k$, that have to be transmitted by the other transmitters among the $K_t$ transmitters), which is precoded by an M × M sub-matrix $W'_k$ such that:

$$V_k = E_k W'_k$$

The sub-matrices $W'_k$, for $k = 1$ to $K_r$, are obtained by implementing beamforming and/or interference alignment based on the view $\hat{H}^{(k)}$ of the global MIMO channel $H$ from the standpoint of each and every $k$-th transmitter. For example, the sub-matrices $W'_k$ are computed according to an interference alignment technique, as in the document "Downlink Interference Alignment" Changho Suh et al, IEEE Transactions on Communications, vol. 59, no. 9, pp. 2616-2626, September 2011. In another example, the sub-matrices $W'_k$ are computed as the eigenvector beamforming of the channel matrix defined by $E_k^T \widehat{H}^{(k)} E_k$, from an SVD operation applied onto said channel matrix by the considered $k$-th transmitter among the $K_t$ transmitters, such that:

$$E_k^T \widehat{H}^{(k)} E_k = U'_k D'_k W'_k$$

wherein:

- $U'_k$ is an $NK_r$ x $NK_r$ unitary matrix, and

- $D'_k$ is an $NK_r$ x $NK_r$ diagonal matrix.

The optimization is then very similar to the approach described above with respect to the block-diagonalization precoding.

Then, the approach described above with respect to the block-diagonalization precoding can thus be similarly applied, as follows.

First, an initial version $\tilde{V}^{(j)}$ of the overall precoder $V$ from the standpoint of each $j$-th transmitter among the $K_t$ transmitters is computed from its own view $\hat{H}^{(j)}$ of the global MIMO channel $H$, such that the overall precoder $V$ and the initial version $V^{(j)}$ thereof have a block diagonal structure. Each block defined by $E_k^T \tilde{V}^{(j)} E_k$ is related to the precoder used at the $k$-th transmitter from the standpoint of each $j$-th transmitter, only for precoding the symbols vector $s_k$, and is related to the sub-matrice $W'_k$ previously described and determined according to an interference alignment or an the eigenvector beamforming technique.

The intial version $\tilde{V}_k^{(\tilde{j})}$ is such that the refinement function $f(.,.)$ is used in the aforementioned multiplicative refinement strategy, which means:

$$V_k^{(j)} = \tilde{V}_k^{(j)} F_k^{(j)}$$

where $F_k^{(j)}$ is a $N$ x $N$ matrix, preferably under the following constraint:

$$Trace\left(F_k^{(j)\dagger} F_k^{(j)}\right) = N$$

Each $j$-th transmitter (such as the transmitter 120a) is then able to compute $EMSE_k^{(j)}(F_1^{(j)}, ..., F_{K_r}^{(j)})$ by using a Monte Carlo simulation, or by using a numerical integration, on the distribution of $\Delta^{(1)}, \Delta^{(2)}, ..., \Delta^{(K_t)}$ which matches the long terms statistics of CSIT error as obtained in the step S301, further with respect to the view $\hat{H}^{(j)}$ of the global MIMO channel $H$ from the standpoint of the transmitter 120a (considered as the $j$-th transmitter among the $K_t$ transmitters), under the constraint that the refinement matrices $F_k^{(j)}$ show block-diagonal respective shapes, by using

$$EMSE_k^{(j)}\left(F_1^{(j)}, ..., F_{K_r}^{(j)}\right) = \mathbb{E}_{\left\{\Delta^{(1)},\Delta^{(2)},...,\Delta^{(K_t)}|\hat{H}^{(j)}\right\}}\left[MSE_k^{(j)}\left(F_1^{(j)}, ..., F_{K_r}^{(j)}\right)\right]$$

Alternatively a mathematical approximation provides a closed form expression of $EMSE_k^{(j)}(F_1^{(j)}, ..., F_{K_r}^{(j)})$, as follows:

$$EMSE_k^{(j)}(F_1^{(j)}, ..., F_{K_r}^{(j)}) = \left(I + (\hat{H}_k^{(j)} \tilde{V}_k^{(j)} F_k^{(j)})^{\dagger}\right.$$
$$\times \left(\sum_{\ell=1,\ell\neq k}^{K_r} \hat{H}_k^{(j)} \tilde{V}_\ell^{(j)} F_\ell^{(j)} (\hat{H}_k^{(j)} \tilde{V}_\ell^{(j)} F_\ell^{(j)})^{\dagger} + I + \Phi_k^{(j)}\right)^{-1} \hat{H}_k^{(j)} \tilde{V}_k^{(j)} F_k^{(j)}\right)^{-1}$$

wherein

$$\Phi_k^{(j)} = \sum_{\substack{\ell=1}}^{K_r} \sum_{\substack{t=1 \\ t \neq j}}^{K_t} \widehat{H}_k^{(j)} E_t E_t^{\dagger} \widehat{H}_{[\ell]}^{(j)+} [\Theta_{[\ell]}^{(j)(t)} \left(\widehat{H}_{[\ell]}^{(j)+}\right)^{\dagger} E_t E_t^{\dagger}$$

$$+ \Theta_{[\ell]}^{(j)(j)} \left(\widehat{H}_{[\ell]}^{(j)+}\right)^{\dagger} \sum_{\substack{t'=1 \\ t' \neq j}}^{K_t} E_{t'} E_{t'}^{\dagger}] \widehat{H}_k^{(j)\dagger}$$

$$+ mdiag \left( \sum_{t=1, t \neq j}^{K_t} \Sigma_k^{(t)} E_t^{\dagger} \, diag \left( \sum_{i=1}^{K_r} E_t^{\dagger} \widehat{H}_{[\ell]}^{(j)+} \left(\Theta_{[\ell]}^{(j)(t)} + \Theta_{[\ell]}^{(j)(j)}\right) \left(\widehat{H}_{[\ell]}^{(j)+}\right)^{\dagger} E_t \right) \right)$$

$$+ mdiag \left( \Sigma_k^{(j)} \, diag \left( \sum_{\ell=1}^{K_r} \tilde{V}_\ell^{(j)} F_\ell^{(j)} (\tilde{V}_\ell^{(j)} F_\ell^{(j)})^{\dagger} \right) \right)$$

wherein

$$\Theta_{[\ell]}^{(j)(t)} = mdiag \left( \Sigma_{[\ell]}^{(t)} \, diag \left( \tilde{V}_\ell^{(j)} F_\ell^{(j)} (\tilde{V}_\ell^{(j)} F_\ell^{(j)})^{\dagger} \right) \right)$$

and

$$\Sigma_k^{(j)} = \begin{bmatrix} \Sigma_{k,1}^{(j)} & , \dots & , \Sigma_{k,K_t}^{(j)} \end{bmatrix}$$

and

$$\Sigma_{[k]}^{(t)} = \begin{bmatrix} (\Sigma_1^{(t)})^{\dagger} & , \dots, & (\Sigma_{k-1}^{(t)})^{\dagger}, & (\Sigma_{k+1}^{(t)})^{\dagger} & , \dots, & (\Sigma_{K_r}^{(t)})^{\dagger} \end{bmatrix}^{\dagger}$$

Therefore, optimization of a figure of merit being a function of $EMSE_k^{(j)}$, such as the sum rate lower bound *LBSR(j)* or *MINMSE(j)*, according to the mathematical expectation of the realization of the estimate errors $\Delta^{(1)}$, $\Delta^{(2)}$, ... , $\Delta^{(K_t)}$ which matches the long-term statistics of CSIT error as obtained in the step S301, leads to obtaining the appropriate set $\left\{ F_k^{(j)} \right\}$ of the refinement matrices $F_k^{(j)}$, $k$ = 1 to $K_r$, and then to obtaining the refined precoder *V(j)* from said appropriate set $\left\{ F_k^{(j)} \right\}$ of the refinement matrices $F_k^{(j)}$ by applying the aforementioned multiplicative refinement strategy.

In a preferred embodiment, an optimized sum rate lower bound *LBSR(j)* is obtained thanks to the iterative algorithm detailed hereafter with regard to Fig. 4.

**Particular embodiment for regularized zero-forcing precoders**

In this particular embodiment, the estimate $\tilde{V}^{(j)}$ of the overall precoder *V* from the standpoint of each and every *j*-th transmitter among the $K_t$ transmitters can be expressed as follows, with respect to each and every *k*-th receiver among the $K_r$ receivers:

$$\tilde{V}_k^{(j)} = \left(\widehat{H}^{(j)\dagger}\widehat{H}^{(j)} + \alpha^{(j)}I\right)^{-1}\widehat{H}_k^{(j)\dagger}$$

wherein $\alpha^{(j)}$ is a scalar representing a regularization coefficient allowing to take into account a balance between interference and useful signal after channel inversion, and allowing optimizing the Signal-to-Interference-plus-Noise Ratio (SINR), and wherein $\alpha^{(j)}$ is optimized according to statistics of the view $\widehat{H}^{(j)}$ of the global MIMO channel *H* from the standpoint of the considered *j*-th transmitter among the $K_t$ transmitters, and wherein $\alpha^{(j)}$ is shared by said *j*-th transmitter with the other transmitters among the $K_t$ transmitters, and wherein $\alpha^{(j)}$ is obtained for example as in the document "Regularized Zero-Forcing for Multiantenna Broadcast Channels with User Selection ", Z. Wang et al, in IEEE Wireless Communications Letters, vol. 1, no. 2, pp. 129-132, April 2012,

and wherein $\tilde{V}_k^{(j)}$ is such that the refinement function *f*(.,.) is used in the aforementioned additive refinement strategy, which means:

$$V_k^{(j)} = \tilde{V}_k^{(j)} + F_k^{(j)}$$

wherein $F_k^{(j)}$ is a $MK_t$ x *N* matrix.

First, a system performance metric is derived for a fixed realization of the estimate errors $\Delta^{(1)}$, $\Delta^{(2)}$, ..., $\Delta^{(K_t)}$ known by the transmitters, and then a statistical analysis on the estimate errors $\Delta^{(1)}$, $\Delta^{(2)}$, ..., $\Delta^{(K_t)}$, which are random variables, is applied according to their respective long term statistics gathered at the step S301. $\widehat{V}_k^{(j)}$ can be computed for a fixed realization of $\Delta^{(1)}$,$\Delta^{(2)}$,..., $\Delta^{(K_t)}$ and with respect to the view $\widehat{H}^{(j)}$ of the global MIMO channel *H* from the standpoint of the transmitter 120a (considered as the *j-th* transmitter among the $K_t$ transmitters), as follows:

$$\widehat{V}_k^{(j)} = \begin{bmatrix} E_1^\dagger V_k^{(1)} \\ \vdots \\ E_{K_t}^\dagger V_k^{(K_t)} \end{bmatrix} = \begin{bmatrix} E_1^\dagger\left(\tilde{V}_k^{(1)} + F_k^{(1)}\right) \\ \vdots \\ E_{K_t}^\dagger\left(\tilde{V}_k^{(K_t)} + F_k^{(K_t)}\right) \end{bmatrix}$$

$$= \begin{bmatrix} E_1^\dagger\left(\tilde{V}_k^{(j)} + C^{(j)-1}\left(\Delta^{(1)} - \Delta^{(j)}\right) - 2C^{(j)-1}.Re\left(\left(\Delta^{(1)} - \Delta^{(j)}\right)^\dagger\widehat{H}^{(j)}\right).\tilde{V}_k^{(j)} + F_k^{(1)}\right) \\ \vdots \\ E_{K_t}^\dagger\left(\tilde{V}_k^{(j)} + C^{(j)-1}\left(\Delta^{(1)} - \Delta^{(j)}\right) - 2C^{(j)-1}.Re\left(\left(\Delta^{(1)} - \Delta^{(j)}\right)^\dagger\widehat{H}^{(j)}\right).\tilde{V}_k^{(j)} + F_k^{(K_t)}\right) \end{bmatrix}$$

wherein *Re{X}* represents the real part of the complex input X, and wherein

$$C^{(j)-1} = \left(\widehat{H}^{(j)\dagger}\widehat{H}^{(j)} + \alpha^{(j)}I\right)^{-1}$$

which then allows defining $MSE_k^{(j)}$ as follows:

$$MSE_k^{(j)} = \frac{1 + \sum_{\ell \neq k} \left\| (\widehat{H}_k^{(j)} + \Delta_k^{(j)})^\dagger \widehat{V}_\ell^{(j)} \right\|^2}{1 + \sum_\ell \left\| (\widehat{H}_k^{(j)} + \Delta_k^{(j)})^\dagger \widehat{V}_\ell^{(j)} \right\|^2}$$

It is reminded that $EMSE_k^{(j)}$ is defined as follows:

$$EMSE_k^{(j)}\left(F_1^{(j)}, \ldots, F_{K_r}^{(j)}\right) = \mathbb{E}_{\left\{\Delta^{(1)}, \Delta^{(2)}, \ldots, \Delta^{(K_t)} | \widehat{H}^{(j)}\right\}}\left[MSE_k^{(j)}\right]$$

The transmitter 120a is then able to compute $EMSE_k^{(j)}(F_1^{(j)}, \ldots, F_{K_r}^{(j)})$ by using a Monte Carlo simulation, or by using a numerical integration, on the distribution of $\Delta^{(1)}$, $\Delta^{(2)}$, ..., $\Delta^{(K_t)}$ which matches the long terms statistics of CSIT error as obtained in the step S301, further with respect to the view $\widehat{H}^{(j)}$ of the global MIMO channel $H$ from the standpoint of the transmitter 120a (considered as the *j-th* transmitter among the $K_t$ transmitters).

Therefore, optimization of a figure of merit being a function of $EMSE_k^{(j)}$, such as the sum rate lower bound *LBSR(j)* or *MINMSE(j)*, according to the mathematical expectation of the realization of the estimate errors $\Delta^{(1)}$, $\Delta^{(2)}$, ..., $\Delta^{(K_t)}$ which matches the long terms statistics of CSIT error as obtained in the step S301, leads to obtaining the appropriate set $\left\{F_k^{(j)}\right\}$ of the refinement matrices $F_k^{(j)}$, $k$ = 1 to $K_r$, and then to obtaining the refined precoder *V(j)* from said appropriate set $\left\{F_k^{(j)}\right\}$ of the refinement matrices $F_k^{(j)}$ by applying the aforementioned additive refinement strategy.

In a preferred embodiment, an optimized sum rate lower bound *LBSR(j)* is obtained thanks to the iterative algorithm as detailed hereafter with regard to Fig. 4.

**Fig. 4** schematically represents an iterative algorithm for determining the refinement matrices $F_k^{(j)}$ from an optimization of *LBSR(j)* and thanks to the above descriptions on how to compute $EMSE_k^{(j)}(F_1^{(j)}, \ldots, F_{K_r}^{(j)})$. The algorithm of Fig. 4 is performed by each and every *j*-th transmitter among the $K_t$ transmitters. Let's illustratively consider that the algorithm of Fig. 4 is performed by the transmitter 120a, considered as the *j*-th transmitter among the $K_t$ transmitters.

It is considered, when starting executing the algorithm of Fig. 4, that the transmitter 120a knows the matrices $\widetilde{V}_k^{(j)}$, $\Sigma_k^{(j)}$ and $\widehat{H}_k^{(j)}$ for any and all *k*-th receivers among the $K_r$ receivers.

In a step S401, the transmitter 120a initializes the refinement matrices $F_k^{(j)}$, for each and every *k*-th receiver among the $K_r$ receivers. The initialization can be set as random under the following constraint:

$$Trace\left(\left(f\left(\widetilde{V}_k^{(j)}, F_k^{(j)}\right)\right)^\dagger f\left(\widetilde{V}_k^{(j)}, F_k^{(j)}\right)\right) = N$$

Alternatively, the refinement matrices $F_k^{(j)}$ are taken as identity $N$ x $N$ matrices for the block diagonal case, and $MK_t$ x $N$ matrices containing only zeros for the regularized zero forcing case.

In a following step S402, the transmitter 120a computes $B_k^{(j)}$, for each and every *k*-th receiver among the $K_r$

receivers such that:

$$B_k^{(j)} = EMSE_k^{(j)}\left(F_1^{(j)}, \dots, F_{K_r}^{(j)}\right)$$

In a following step S403, the transmitter 120a adjusts the refinement matrices $F_k^{(j)}$, for each and every $k$-th receiver among the $K_r$ receivers, as follows:

$$F_1^{(j)}, \dots, F_{K_r}^{(j)} = \arg\min_{A_1, \dots, A_{K_r}} \sum_{i=1}^{K_r} Trace\left(B_k^{(j)}.EMSE_k^{(j)}\left(A_1, \dots, A_{K_r}\right)\right)$$

such that the following constraint is preferably met:

$$Trace\left(\left(f\left(\tilde{V}_k^{(j)}, F_k^{(j)}\right)\right)^\dagger f\left(\tilde{V}_k^{(j)}, F_k^{(j)}\right)\right) = N$$

In a following step S404, the transmitter 120a checks whether convergence has been reached with respect to $F_1^{(j)}, \dots, F_{K_r}^{(j)}$, for each and every $k$-th receiver among the $K_r$ receivers. If such convergence has been reached, a step S405 is performed in which the algorithm of Fig. 4 ends; otherwise, the step S402 is repeated, in which $B_k^{(j)}$ is updated thanks to the values of $F_1^{(j)}, \dots, F_{K_r}^{(j)}$ obtained in the last occurrence of the step S403.

The optimization of *MINMSE*$^{(j)}$ can also be done in order to determine the refinement matrices $F_k^{(j)}$ thanks to the above descriptions on how to compute $EMSE_k^{(j)}(F_1^{(j)}, \dots, F_{K_r}^{(j)}).$ This leads to a convex optimization problem.

**Claims**

1. A method for performing transmissions (S305) of data between a plurality of $K_t$ transmitters (120a, 120b) and a plurality of $K_r$ receivers (110a, 110b) via a global MIMO channel $H = [H_1, \dots, H_{K_r}]$ of a wireless communication system (100), by determining in a distributed fashion precoders to be applied for performing (S305) said transmissions, said precoders being respectively applied by said transmitters (120a, 120b) and jointly forming an overall precoder $V$, wherein each and every $j$-th transmitter (120a, 120b) among said plurality of $K_t$ transmitters (120a, 120b) performs:

   - obtaining (S302) short-term CSIT related data and building its own view $\hat{H}^{(j)}$ of the global MIMO channel $H$;
   - determining (S303) an estimate $\tilde{V}^{(j)}$ of the overall precoder $V$ from the obtained short-term CSIT related data;

   **characterized in that** said $j$-th transmitter (120a, 120b) further performs:

   - gathering (S301) long-term statistics of Channel State Information at Transmitter CSIT errors incurred by each one of the $K_t$ transmitters (120a, 120b) with respect to the global MIMO channel $H$, the long-term statistics describing the random variation of the CSIT errors;
   - refining (S304) the estimate $\tilde{V}^{(j)} = \left[\tilde{V}_1^{(j)}, \dots, \tilde{V}_{K_r}^{(j)}\right]$ of the overall precoder $V$ on the basis of the gathered long-term statistics of CSIT errors so as to obtain a refined precoder $V^{(j)} = \left[ V_1^{(j)}, ..., V_{K_r}^{(j)} \right]$ that is a view of the overall precoder $V$ from the standpoint of said $j$-th transmitter (120a, 120b), further on the basis of its own view $\hat{H}^{(j)}$ of the global MIMO channel $H$, and further on the basis of a figure of merit representative of performance of said transmissions via the global MIMO channel $H$; and

- transmitting (S305) the data by applying a precoder that is formed by a part of the refined precoder $V^{(j)}$ which relates to said $j$-th transmitter (120a, 120b) among said plurality of $K_t$ transmitters (120a, 120b).

2. The method according to claim 1, **characterized in that** the figure of merit is a lower bound of a sum rate $LBSR^{(j)}$ reached via the global MIMO channel $H$, from the standpoint of said $j$-th transmitter (120a, 120b) with respect to its own view $\hat{H}^{(j)}$ of the global MIMO channel $H$, as follows:

$$LBSR^{(j)} = \sum_{k=1}^{K_r} log \left| det\left( EMSE_k^{(j)}(F_1^{(j)}, ..., F_{K_r}^{(j)}) \right)^{-1} \right|$$

wherein

$$EMSE_k^{(j)}\left( F_1^{(j)}, ..., F_{K_r}^{(j)} \right) = \mathbb{E}_{\left\{ \Delta^{(1)}, \Delta^{(2)}, ..., \Delta^{(K_t)} | \hat{H}^{(j)} \right\}} \left[ MSE_k^{(j)}\left( F_1^{(j)}, ..., F_{K_r}^{(j)} \right) \right]$$

wherein $F_k^{(j)}$, $k = 1$ to $K_r$ are refinement matrices, and

wherein $\mathbb{E}$ represents the mathematical expectation and, wherein $MSE_k^{(j)}\left( F_1^{(j)}, ..., F_{K_r}^{(j)} \right)$ represents mean square error matrix between the data to be transmitted and a corresponding filtered received vector for a realization of estimate errors $\Delta^{(1)}, \Delta^{(2)}, ..., \Delta^{(K_t)}$ which matches the long terms statistics of CSIT errors.

3. The method according to claim 1, **characterized in that** the figure of merit is the sum of traces $MINMSE^{(j)}$, for $k = 1$ to $K_r$, of $EMSE_k^{(j)}\left( F_1^{(j)}, ..., F_{K_r}^{(j)} \right)$, as follows:

$$MINMSE^{(j)} = \sum_{k=1}^{K_r} Trace(EMSE_k^{(j)}(F_1^{(j)}, ..., F_{K_r}^{(j)}))$$

wherein

$$EMSE_k^{(j)}\left( F_1^{(j)}, ..., F_{K_r}^{(j)} \right) = \mathbb{E}_{\left\{ \Delta^{(1)}, \Delta^{(2)}, ..., \Delta^{(K_t)} | \hat{H}^{(j)} \right\}} \left[ MSE_k^{(j)}\left( F_1^{(j)}, ..., F_{K_r}^{(j)} \right) \right]$$

wherein $F_k^{(j)}$, $k = 1$ to $K_r$ are refinement matrices, and

wherein $\mathbb{E}$ represents the mathematical expectation and, wherein $MSE_k^{(j)}\left( F_1^{(j)}, ..., F_{K_r}^{(j)} \right)$ represents the mean square error matrix between the data to be transmitted and a corresponding filtered received vector for a realization of estimate errors $\Delta^{(1)}, \Delta^{(2)}, ..., \Delta^{(K_t)}$ which matches the long terms statistics of CSIT errors.

4. The method according to any one of claims 1 to 3, **characterized in that** refining the estimate $\hat{V}^{(j)}$ of the overall precoder $V$ is performed thanks to a refinement function $f(.,.)$, as well as a set $\left\{ \hat{F}_k^{(j)} \right\}$ of refinement matrices $F_k^{(j)}$, $k = 1$ to $K_r$ in a multiplicative refinement strategy, as follows:

$$V_k{}^{(j)} = f\left(\tilde{V}_k{}^{(j)}, F_k^{(j)}\right) = \tilde{V}_k{}^{(j)} F_k^{(j)}$$

5. The method according to claim 4, **characterized in that** the overall precoder *V* is a block-diagonalization precoder, the transmitters (120a, 120b) have cumulatively at least as many antennas as the receivers (110a, 110b), and **in that** refining the estimate $\hat{V}^{(j)}$ of the overall precoder *V* thus consists in optimizing the set $\left\{F_k^{(j)}\right\}$ of the refinement matrices $F_k^{(j)}$ with respect to the set $\left\{\tilde{V}_k^{(j)}\right\}$ of the matrices $\tilde{V}_k^{(j)}$, which is obtained by applying a Singular Value Decomposition operation as follows:

$$\widehat{H}_{[k]}^{(j)} = U_{[k]}^{(j)} \left[D_{[k]}^{(j)}, 0\right] \left[\tilde{V}'{}^{(j)}_{[k]}, \tilde{V}''{}^{(j)}_k\right]^{\dagger}$$

wherein $\widehat{H}_{[k]}^{(j)}$ represents a view of an aggregated interference channel estimation $\hat{H}_{[k]}$ for the *k-th* receiver (110a, 110b) among the $K_r$ receivers from the standpoint of said *j*-th transmitter (120a, 120b), with

$$H_{[k]} = \left[H_1^{\dagger}, \ldots, H_{k-1}^{\dagger}, H_{k+1}^{\dagger}, \ldots, H_{K_r}^{\dagger}\right]^{\dagger}$$

wherein $\tilde{V}_k^{(j)}$ is obtained by selecting, according to a predefined selection rule similarly applied by any and all transmitters (120a, 120b), a predetermined set of *N* columns of the matrix $\tilde{V}''{}^{(j)}_k$ resulting from the Singular Value Decomposition operation, wherein each receiver (110a, 110b) has a quantity *N* of receive antennas.

6. The method according to claim 4, **characterized in that** the overall precoder *V* is an interference aware coordinated beamforming precoder with block-diagonal shape, $K_t = K_r$ and each transmitter (120a, 120b) has as a quantity *M* of transmit antennas equal to a quantity *N* of receive antennas of each receiver (110a, 110b), each transmitter (120a, 120b) communicates only with a single receiver (1101a, 110b) among the $K_r$ receivers (110a, 110b) such that *k = j*, wherein a sub-matrix $W_k'$ such that:

$$V_k = E_k W_k'$$

is computed as the eigenvector beamforming of the channel matrix defined by $E_k^T \widehat{H}^{(k)} E_k$, from a Singular Value Decomposition operation applied onto said channel matrix defined by $E_k^T \widehat{H}^{(k)} E_k$ as follows:

$$E_k^T \widehat{H}^{(k)} E_k = U_k' D_k' W_k'$$

wherein $E_k$ is defined as follows:

$$E_k = \left[0_{M\times(k-1)M}, I_{M\times M}, 0_{M\times(K_t-k)M}\right]^T$$

with $0_{M\times(k-1)M}$ an $M\times(k-1)M$ sub-matrix containing only zeros, $0_{M\times(Kt-k)M}$ an $M\times(K_t-1)M$ sub-matrix containing only zeros, and $I_{M\times M}$ an $M\times M$ identity sub-matrix.

7. The method according to any one of claims 1 to 3, **characterized in that** refining the estimate $\tilde{V}^{(j)}$ of the overall precoder $V$ is performed thanks to a refinement function $f(.,.)$, as well as a set $\left\{F_k^{(j)}\right\}$ of refinement matrices $F_k^{(j)}$, $k = 1$ to $K_r$, in an additive refinement strategy, as follows:

$$V_k^{(j)} = f\left(\tilde{V}_k^{(j)}, F_k^{(j)}\right) = \tilde{V}_k^{(j)} + F_k^{(j)}$$

8. The method according to claim 7, **characterized in that** the overall precoder $V$ is a regularized zero-forcing precoder, and the estimate $\tilde{V}^{(j)}$ of the overall precoder $V$ can be expressed as follows :

$$\tilde{V}_k^{(j)} = \left(\widehat{H}^{(j)\dagger}\widehat{H}^{(j)} + \alpha^{(j)}I\right)^{-1}\widehat{H}_k^{(j)\dagger}$$

wherein $\alpha^{(j)}$ is a scalar representing a regularization coefficient that is optimized according to statistics of the own view $\widehat{H}^{(j)}$ of the global MIMO channel $H$ from the standpoint of said $j$-th transmitter (120a, 120b), and wherein $\alpha^{(j)}$ is shared by said $j$-th transmitter (120a, 120b) with the other transmitters (120a, 120b) among the $K_t$ transmitters (120A, 120b).

9. The method according to any one of claims 1 to 8, **characterized in that** refining the estimate $\tilde{V}^{(j)}$ of the overall precoder $V$ is performed under the following power constraint:

$$Trace\left(\left(f\left(\tilde{V}_k^{(j)}, F_k^{(j)}\right)\right)^{\dagger} f\left(\tilde{V}_k^{(j)}, F_k^{(j)}\right)\right) = N$$

wherein $f(.,.)$ is a refinement function and $F_k^{(j)}$, $k = 1$ to $K_r$ are refinement matrices, and wherein each receiver (110a, 110b) has a quantity $N$ of receive antennas.

10. A computer program, **characterized in that** it comprises program code instructions which can be loaded in a programmable device for implementing the method according to any one of claims 1 to 9, when the program code instructions are run by the programmable device.

11. An information storage medium, **characterized in that** it stores a computer program comprising program code instructions which can be loaded in a programmable device for implementing the method according to any one of claims 1 to 9, when the program code instructions are run by the programmable device.

12. A device for performing transmissions (S305) of data between a plurality of $K_t$ transmitters (120a, 120b) and a plurality of $K_r$ receivers (110a, 110b) via a global MIMO channel $H = [H_1,...,H_{K_r}]$ of a wireless communication system (100), by determining in a distributed fashion precoders to be applied for performing (S305) said transmissions, said precoders being respectively applied by said transmitters (120A, 120b) and jointly forming an overall precoder $V$, wherein said device is each and every $j$-th transmitter (120a, 120b) among said plurality of $K_t$ transmitters (120a, 120b) and comprises:

- means for obtaining (S302) short-term CSIT related data and building its own view $\widehat{H}^{(j)}$ of the global MIMO channel $H$;
- means for determining (S303) an estimate $\tilde{V}^{(j)}$ of the overall precoder $V$ from the obtained short-term CSIT related data;

**characterized in that** said device further comprises:

- means for gathering (S301) long-term statistics of Channel State Information at Transmitter CSIT errors incurred by each one of the $K_t$ transmitters (120a, 120b) with respect to the global MIMO channel $H$, the long-term statistics describing the random variation of the CSIT errors;

- means for refining (S304) the estimate $\tilde{V}^{(j)} = \left[ \tilde{V}_1^{(j)}, \ldots, \tilde{V}_{K_r}^{(j)} \right]$ of the overall precoder $V$ on the basis of the gathered long-term statistics of CSIT errors so as to obtain a refined precoder $V^{(j)} = \left[ V_1^{(j)}, \ldots, V_{K_r}^{(j)} \right]$ that is a view of the overall precoder $V$ from the standpoint of said $j$-th transmitter (120a, 120b), further on the basis of its own view $\hat{H}^{(j)}$ of the global MIMO channel $H$, and further on the basis of a figure of merit representative of performance of said transmissions via the global MIMO channel $H$; and

- means for transmitting (S305) the data by applying a precoder that is formed by a part of the refined precoder $V^{(j)}$ which relates to said $j$-th transmitter (120a, 120b) among said plurality of $K_t$ transmitters (120a, 120b).

**Patentansprüche**

**1.** Verfahren zum Durchführen von Sendungen (S305) von Daten zwischen einer Vielzahl von $K_t$ Sendern (120a, 120b) und einer Vielzahl von $K_r$ Empfängern (110a, 110b) über einen globalen MIMO-Kanal $H = [H_1, \ldots, H_{K_r}]$ eines drahtlosen Kommunikationssystems (100) durch Bestimmen, auf eine verteilte Weise, von Vorcodierern, um zum Durchführen (S305) der Sendungen angewendet zu werden, wobei die Vorcodierer jeweils durch die Sender (120a, 120b) angewendet werden und gemeinsam einen gesamten Vorcodierer $V$ bilden, wobei jeder einzelne $j$-te Sender (120a, 120b) unter der Vielzahl von $K_t$ Sendern (120a, 120b) folgendes durchführt:

- Erhalten (S302) von kurzfristigen auf CSIT bezogenen Daten und Bilden ihrer eigenen Sicht $\hat{H}^{(j)}$ des globalen MIMO-Kanals $H$;
- Bestimmen (S303) einer Schätzung $\tilde{V}^{(j)}$ des gesamten Vorcodierers $V$ aus den erhaltenen kurzfristigen auf CSIT bezogenen Daten;

**dadurch gekennzeichnet, dass** der $j$-te Sender (120a, 120b) weiterhin folgendes durchführt:

- Sammeln (S301) langfristiger Statistiken von Kanalzustandsinformation-bei-Sender-CSIT-Fehlern, die durch einen jeweiligen der $K_t$ Sender in Bezug auf den globalen MIMO-Kanal $H$ angefallen sind, wobei die langfristigen Statistiken die Zufallsvariation der CSIT-Fehler beschreiben;
- Verfeinern (S304) der Schätzung $\tilde{V}^{(j)} = \left[ \tilde{V}_1^{(j)}, \ldots, \tilde{V}_{K_r}^{(j)} \right]$ des gesamten Vorcodierers $V$ auf der Basis der gesammelten langfristigen Statistiken von CSIT-Fehlern, um einen verfeinerten Vorcodierer $V^{(j)} = \left[ V_1^{(j)}, \ldots, V_{K_r}^{(j)} \right]$ zu erhalten, der eine Sicht des gesamten Vorcodierers $V$ unter dem Gesichtspunkt des $j$-ten Senders (120a, 120b) ist, weiterhin auf der Basis seiner eigenen Sicht $\hat{H}^{(j)}$ des globalen MIMO-Kanals $H$ und weiterhin auf der Basis eines Bewertungsfaktors, der eine Leistungsfähigkeit der Sendungen über den globalen MIMO-Kanal $H$ darstellt; und
- Senden (S305) der Daten durch Anwenden eines Vorcodierers, der durch einen Teil des verfeinerten Vorcodierers $V^{(j)}$ ausgebildet ist, der sich auf den $j$-ten Sender (120a, 120b) unter der Vielzahl von $K_t$ Sendern bezieht.

**2.** Verfahren nach Anspruch 1, **dadurch gekennzeichnet, dass** der Bewertungsfaktor eine untere Grenze einer Summenrate $LBSR^{(j)}$ ist, die über den globalen MIMO-Kanal $H$ erreicht ist, unter dem Gesichtspunkt des $j$-ten Senders (120a, 120b) in Bezug auf seine eigene Sicht $\hat{H}^{(j)}$ des globalen MIMO-Kanals $H$, wie es folgt:

$$LBSR^{(j)} = \sum_{k=1}^{K_r} log \left| det \left( EMSE_k^{(j)} \left( F_1^{(j)}, \ldots, F_{K_r}^{(j)} \right) \right)^{-1} \right|$$

wobei

$$EMSE_k^{(j)} \left( F_1^{(j)}, \ldots, F_{K_r}^{(j)} \right) = \mathbb{E}_{\{\Delta^{(1)}, \Delta^{(2)}, \ldots, \Delta^{(K_r)}\} | \hat{H}^{(j)}} \left[ MSE_k^{(j)} \left( F_1^{(j)}, \ldots, F_{K_r}^{(j)} \right) \right]$$

wobei $F_k^{(j)}$, $k$ = 1 bis $K_r$ Verfeinerungsmatrizen sind, und

wobei $\mathbb{E}$ die mathematische Erwartung darstellt, und wobei $MSE_k^{(j)}\left(F_1^{(j)},\ldots,F_{K_r}^{(j)}\right)$ eine Matrix eines mittleren Fehlerquadrats zwischen den zu sendenden Daten und einem entsprechenden gefilterten empfangenen Vektor für eine Realisierung von Schätzungsfehlern $\Delta^{(1)},\Delta^{(2)},\ldots,\Delta^{(K_t)}$, die die langfristigen Statistiken von CSIT-Fehlern anpasst, darstellt.

3. Verfahren nach Anspruch 1, **dadurch gekennzeichnet, dass** der Bewertungsfaktor die Summe von Einzelschritt-Fehlersuchen *MINMSE(j)* für $k$ = 1 bis $K_r$ von $EMSE_k^{(j)}\left(F_1^{(j)},\ldots,F_{K_r}^{(j)}\right)$ ist, wie es folgt:

$$MINMSE^{(j)} = \sum_{k=1}^{K_r} Trace\left(EMSE_k^{(j)}\left(F_1^{(j)},\ldots,F_{K_r}^{(j)}\right)\right)$$

wobei

$$EMSE_k^{(j)}\left(F_1^{(j)},\ldots,F_{K_r}^{(j)}\right) = \mathbb{E}_{\left\{\Delta^{(1)},\Delta^{(2)},\ldots,\Delta^{(K_t)}|\hat{H}^{(j)}\right\}}\left[MSE_k^{(j)}\left(F_1^{(j)},\ldots,F_{K_r}^{(j)}\right)\right]$$

wobei $F_k^{(j)}$, $k$ = 1 bis $K_r$ Verfeinerungsmatrizen sind, und

wobei $\mathbb{E}$ die mathematische Erwartung darstellt, und wobei $MSE_k^{(j)}\left(F_1^{(j)},\ldots,F_{K_r}^{(j)}\right)$ eine Matrix eines mittleren Fehlerquadrats zwischen den zu sendenden Daten und einem entsprechenden gefilterten empfangenen Vektor für eine Realisierung von Schätzungsfehlern $\Delta^{(1)},\Delta^{(2)},\ldots,\Delta^{(K_t)}$, die die langfristigen Statistiken von CSIT-Fehlern anpasst, darstellt.

4. Verfahren nach einem der Ansprüche 1 bis 3, **dadurch gekennzeichnet, dass** ein Verfeinern der Schätzung $\tilde{V}^{(j)}$ des gesamten Vorcodierers $V$ dank einer Verfeinerungsfunktion $f(.,.)$ durchgeführt wird, sowie einer Gruppe $\left\{F_k^{(j)}\right\}$ von Verfeinerungsmatrizen $F_k^{(j)}$, $k$ = 1 bis $K_r$, in einer multiplikativen Verfeinerungsstrategie, wie es folgt:

$$V_k^{(j)} = f\left(\tilde{V}_k^{(j)}, F_k^{(j)}\right) = \tilde{V}_k^{(j)} F_k^{(j)}$$

5. Verfahren nach Anspruch 4, **dadurch gekennzeichnet, dass** der gesamte Vorcodierer $V$ ein Blockdiagonalisierungs-Vorcodierer ist, die Sender (120a, 120b) kumulativ wenigstens so viele Antennen wie die Empfänger (110a, 110b) haben und dass eine Verfeinerung der Schätzung $\tilde{V}^{(j)}$ des gesamten Vorcodierers $V$ somit in einem Optimieren der Gruppe $\left\{F_k^{(j)}\right\}$ der Verfeinerungsmatrizen $F_k^{(j)}$ in Bezug auf die Gruppe $\left\{\tilde{V}_k^{(j)}\right\}$ der Matrizen $\tilde{V}_k^{(j)}$ besteht, die durch Anwenden einer Singulärwert-Zerlegungsoperation erhalten wird, wie es folgt:

$$\hat{H}_{[k]}^{(j)} = U_{[k]}^{(j)}\left[D_{[k]}^{(j)},0\right]\left[\tilde{V'}_{[k]}^{(j)},\tilde{V''}_k^{(j)}\right]^{\dagger}$$

wobei $\widehat{H}_{[k]}^{(j)}$ eine Sicht einer aggregierten Interferenzkanalschätzung $\hat{H}_{[k]}$ für den *k*-ten Empfänger (110a, 110b) unter den $K_r$ Empfängern unter dem Gesichtspunkt des *j*-ten Senders (120a, 120b) darstellt, mit

$$H_{[k]} = \left[ H_1^\dagger, \ldots, H_{k-1}^\dagger, H_{k+1}^\dagger, \ldots, H_{K_r}^\dagger \right]^\dagger$$

wobei $\tilde{V}_k^{(j)}$ erhalten wird durch Auswählen, gemäß einer vordefinierten Auswahlregel, die ähnlich durch irgendeinen und alle Sender (120a, 120b) angewendet wird, einer vorbestimmten Gruppe von *N* Spalten der Matrix $\tilde{V''}_k^{(j)}$ resultierend aus der Singulärwert-Zerlegungsoperation, wobei jeder Empfänger (110a, 110b) eine Quantität *N* von Empfangsantennen hat.

6. Verfahren nach Anspruch 4, **dadurch gekennzeichnet, dass** der gesamte Vorcodierer *V* ein interferenzbewusster koordinierter strahlformender Vorcodierer mit Blockdiagonalform, $K_t = K_r$, ist, und jeder Sender (120a, 120b) eine Quantität *M* von Sendeantennen gleich einer Quantität *N* von Empfangsantennen jedes Empfängers (110a, 110b) hat, jeder Sender (120a, 120b) nur mit einem einzelnen Empfänger (110a, 110b) unter den $K_r$ Empfängern (110a, 110b) kommuniziert, so dass *k* = *j*,

wobei eine Untermatrix $W_k'$ so ist, dass

$$V_k = E_k W_k'$$

als die Eigenvektorstrahlformung der Kanalmatrix berechnet wird, die durch $E_k^T \widehat{H}^{(k)} E_k$ definiert ist, aus einer Singulärwert-Zerlegungsoperation, die angewendet ist auf die Kanalmatrix, die durch $E_k^T \widehat{H}^{(k)} E_k$ definiert ist, wie es folgt:

$$E_k^T \widehat{H}^{(k)} E_k = U_k' D_k' W_k'$$

wobei $E_k$ definiert ist, wie es folgt:

$$E_k = \left[ O_{Mx(k-1)M}, I_{MxM}, O_{Mx(K_t-k)M} \right]^T$$

wobei $O_{Mx(k-1)M}$ eine *Mx(k* - 1)*M*-Untermatrix ist, die nur Nullen enthält, $O_{Mx(K_t-k)M}$ eine *Mx(K_t* - *k)M*-Untermatrix ist, die nur Nullen enthält und $I_{MxM}$ eine *MxM*-Identitäts-Untermatrix ist.

7. Verfahren nach einem der Ansprüche 1 bis 3, **dadurch gekennzeichnet, dass** ein Verfeinern der Schätzung $\tilde{V}^{(j)}$ des gesamten Vorcodierers *V* durchgeführt wird dank einer Verfeinerungsfunktion *f(.,.)*, sowie einer Gruppe $\{F_k^{(j)}\}$ von Verfeinerungsmatrizen $F_k^{(j)}$, *k* = 1 bis $K_r$ in einer additiven Verfeinerungsstrategie, wie es folgt:

$$V_k^{(j)} = f\left( \tilde{V}_k^{(j)}, F_k^{(j)} \right) = \tilde{V}_k^{(j)} + F_k^{(j)}$$

8. Verfahren nach Anspruch 7, **dadurch gekennzeichnet, dass** der gesamte Vorcodierer *V* ein geregelte Null-Erzwingungs-Vorcodierer ist und eine Schätzung $\tilde{V}^{(j)}$ des gesamten Vorcodierers *V* ausgedrückt werden kann, wie

es folgt:

$$\tilde{V}_k^{(j)} = \left( \widetilde{H}^{(j)\dagger} \widetilde{H}^{(j)} + \alpha^{(j)} I \right)^{-1} \widetilde{H}_k^{(j)\dagger}$$

wobei $\alpha^{(j)}$ ein Skalar ist, der einen Regularisierungskoeffizienten darstellt, der gemäß Statistiken der eigenen Sicht $\hat{H}^{(j)}$ des globalen MIMO-Kanals $H$ unter dem Gesichtspunkt des $j$-ten Senders (120a, 120b) optimiert wird, und wobei $\alpha^{(j)}$ durch den $j$-ten Sender (120a, 120b) mit den anderen Sendern (120a, 120b) unter den $K_t$ Sendern (120a, 120b) gemeinsam genutzt wird.

9. Verfahren nach einem der Ansprüche 1 bis 8, **dadurch gekennzeichnet, dass** ein Verfeinern der Schätzung $\tilde{V}^{(j)}$ des gesamten Vorcodierers $V$ durchgeführt wird unter der folgenden Leistungsbeschränkung:

$$Trace\left( \left( f\left( \tilde{V}_k^{(j)}, F_k^{(j)} \right) \right)^{\dagger} f\left( \tilde{V}_k^{(j)}, F_k^{(j)} \right) \right) = N$$

wobei $f(.,.)$ eine Verfeinerungsfunktion ist und $F_k^{(j)}$, $k$ = 1 bis $K_r$ Verfeinerungsmatrizen sind, und wobei jeder Empfänger (110a, 110b) eine Quantität $N$ von Empfangsantennen hat.

10. Computerprogramm, **dadurch gekennzeichnet, dass** es Programmcodeanweisungen umfasst, die in eine programmierbare Vorrichtung geladen werden können, zum Implementieren des Verfahrens nach einem der Ansprüche 1 bis 9, wenn die Programmcodeanweisungen durch die programmierbare Vorrichtung laufen gelassen werden.

11. Informationsspeichermedium, **dadurch gekennzeichnet,** es ein Computerprogramm speichert, das Programmcodeanweisungen umfasst, die in eine programmierbare Vorrichtung geladen werden können, zum Implementieren des Verfahrens nach einem der Ansprüche 1 bis 9, wenn die Programmcodeanweisungen durch die programmierbare Vorrichtung laufen gelassen werden.

12. Vorrichtung zum Durchführen von Sendungen (S305) von Daten zwischen einer Vielzahl von $K_t$ Sendern (120a, 120b) und einer Vielzahl von $K_r$ Empfängern (110a, 110b) über einen globalen MIMO-Kanal $H = [H_1,...,H_{K_r}]$ eines drahtlosen Kommunikationssystems (100) durch Bestimmen, auf eine verteilte Weise, von Vorcodierern, um zum Durchführen (S305) der Sendungen angewendet zu werden, wobei die Vorcodierer jeweils durch die Sender (120a, 120b) angewendet werden und gemeinsam einen gesamten Vorcodierer $V$ bilden, wobei die Vorrichtung jeder einzelne $j$-te Sender (120a, 120b) unter der Vielzahl von $K_t$ Sendern (120a, 120b) ist und folgendes umfasst:

- Mittel zum Erhalten (S302) von kurzfristigen auf CSIT bezogenen Daten und Bilden ihrer eigenen Sicht $\hat{H}^{(j)}$ des globalen MIMO-Kanals $H$;
- Mittel zum Bestimmen (S303) einer Schätzung $\tilde{V}^{(j)}$ des gesamten Vorcodierers $V$ aus den erhaltenen kurzfristigen auf CSIT bezogenen Daten;

**dadurch gekennzeichnet, dass** die Vorrichtung weiterhin folgendes umfasst:

- Mittel zum Sammeln (S301) langfristiger Statistiken von Kanalzustandsinformation-bei-Sender-CSIT-Fehlern, die durch einen jeweiligen der $K_t$ Sender in Bezug auf den globalen MIMO-Kanal $H$ angefallen sind, wobei die langfristigen Statistiken die Zufallsvariation der CSIT-Fehler beschreiben;
- Mittel zum Verfeinern (S304) der Schätzung $\tilde{V}^{(j)} = \left[ \tilde{V}_1^{(j)},..., \tilde{V}_{K_r}^{(j)} \right]$ des gesamten Vorcodierers $V$ auf der Basis der gesammelten langfristigen Statistiken von CSIT-Fehlern, um einen verfeinerten Vorcodierer $V^{(j)} = \left[ V_1^{(j)},..., V_{K_r}^{(j)} \right]$ zu erhalten, der eine Sicht des gesamten Vorcodierers $V$ unter dem Gesichtspunkt des $j$-ten Senders (120a, 120b) ist, weiterhin auf der Basis seiner eigenen Sicht $\hat{H}^{(j)}$ des globalen MIMO-Kanals $H$ und weiterhin auf der Basis eines Bewertungsfaktors, der eine Leistungsfähigkeit der Sendungen über den globalen MIMO-Kanal $H$ darstellt; und

- Mittel zum Senden (S305) der Daten durch Anwenden eines Vorcodierers, der durch einen Teil des verfeinerten Vorcodierers $V^{(j)}$ ausgebildet ist, der sich auf den $j$-ten Sender (120a, 120b) unter der Vielzahl von $K_t$ Sendern bezieht.

## Revendications

**1.** Méthode pour effectuer des transmissions de données entre une pluralité de $K_t$ transmetteurs et une pluralité de $K_r$ récepteurs via un canal MIMO global $H = [H_1,...,H_{K_r}]$ d'un système de communication sans fil, en déterminant de façon distribuée des précodeurs à appliquer pour effectuer lesdites transmissions, lesdits précodeurs étant respectivement appliqués par lesdits transmetteurs et formant conjointement un précodeur global $V$, **caractérisée en ce que** chaque $j$-ième transmetteur parmi ladite pluralité de $K_t$ transmetteurs effectue :

- collecter des statistiques long terme sur des erreurs d'information d'état de canal au transmetteur, information CSIT, subies par chacun des $K_t$ transmetteurs par rapport au canal MIMO global $H$, les statistiques long terme décrivant la variation aléatoire des erreurs d'information CSIT ;
- obtenir des données court terme relatives à l'information CSIT et construire sa propre vue $\hat{H}^{(j)}$ du canal MIMO global $H$ ;
- déterminer une estimation $\tilde{V}^{(j)}$ du précodeur global $V$ à partir des données court terme relatives à l'information CSIT obtenues ;
- affiner l'estimation $\tilde{V}^{(j)} = \left[ \tilde{V}_1^{(j)}, ..., \tilde{V}_{K_r}^{(j)} \right]$ du précodeur global $V$ en se basant sur les statistiques long terme sur les erreurs d'information CSIT collectées de sorte à obtenir un précodeur affiné $V^{(j)} = \left[ V_1^{(j)}, ..., V_{K_r}^{(j)} \right]$ qui est une vue du précodeur global $V$ du point de vue dudit $j$-ième transmetteur, en se basant en outre sur sa propre vue $\hat{H}^{(j)}$ du canal MIMO global $H$, et en se basant en outre sur un facteur de mérite représentatif de la performance desdites transmissions à travers le canal MIMO global $H$ ; et
- transmettre les données en appliquant un précodeur qui est formé par une partie du précodeur affiné $V^{(j)}$ correspondant audit $j$-ième transmetteur parmi ladite pluralité de $K_t$ transmetteurs.

**2.** Méthode selon la revendication 1, **caractérisée en ce que** le facteur de mérite est une limite inférieure d'un débit total $LBSR^{(j)}$ atteinte via le canal MIMO global $H$, du point de vue dudit $j$-ième transmetteur par rapport à sa propre vue $\hat{H}^{(j)}$ du canal MIMO global $H$, selon la formule :

$$LBSR^{(j)} = \sum_{k=1}^{K_r} log \left| det \left( EMSE_k^{(j)}(F_1^{(j)}, ..., F_{K_r}^{(j)}) \right)^{-1} \right|$$

où

$$EMSE_k^{(j)}\left( F_1^{(j)}, ..., F_{K_r}^{(j)} \right) = \mathbb{E}_{\left\{ \Delta^{(1)}, \Delta^{(2)}, ..., \Delta^{(K_t)} | \hat{H}^{(j)} \right\}} \left[ MSE_k^{(j)}\left( F_1^{(j)}, ..., F_{K_r}^{(j)} \right) \right]$$

où $\mathbb{E}$ représente l'espérance mathématique et où $MSE_k^{(j)}\left( F_1^{(j)}, ..., F_{K_r}^{(j)} \right)$ représente la matrice d'erreur quadratique moyenne entre les données à transmettre et un vecteur reçu et filtré correspondant pour une réalisation d'erreurs d'estimation $\Delta^{(1)}, \Delta^{(2)}, ..., \Delta^{(K_t)}$ qui concorde avec les statistiques long-terme sur les erreurs d'information CSIT.

**3.** Méthode selon la revendication 1, **caractérisée en ce que** le facteur de mérite est la somme des traces $MINMSE^{(j)}$, pour $k = 1$ à $K_r$, de $EMSE_k^{(j)}\left( F_1^{(j)}, ..., F_{K_r}^{(j)} \right)$, selon la formule :

$$MINMSE^{(j)} = \sum_{k=1}^{K_r} Trace(EMSE_k^{(j)}(F_1^{(j)}, \ldots, F_{K_r}^{(j)}))$$

où

$$EMSE_k^{(j)}\left(F_1^{(j)}, \ldots, F_{K_r}^{(j)}\right) = \mathbb{E}_{\left\{\Delta^{(1)}, \Delta^{(2)}, \ldots, \Delta^{(K_t)} | \widehat{H}^{(j)}\right\}}\left[MSE_k^{(j)}\left(F_1^{(j)}, \ldots, F_{K_r}^{(j)}\right)\right]$$

où $\mathbb{E}$ représente l'espérance mathématique et où $MSE_k^{(j)}\left(F_1^{(j)}, \ldots, F_{K_r}^{(j)}\right)$ représente la matrice d'erreur quadratique moyenne entre les données à transmettre et un vecteur reçu et filtré correspondant pour une réalisation d'erreurs d'estimation $\Delta^{(1)}, \Delta^{(2)}, \ldots, \Delta^{(Kt)}$ qui concorde avec les statistiques à long-terme des erreurs d'information CSIT.

4. Méthode selon l'un des revendications 1 à 3, **caractérisée en ce que** affiner l'estimation $\tilde{V}^{(j)}$ du précodeur global $V$ est effectué grâce à une fonction d'affinage $f(.,.)$, ainsi qu'un ensemble $\left\{\bar{F}_k^{(j)}\right\}$ de matrices d'affinage $F_k^{(j)}$, $k$ = 1 à $K_r$, avec une stratégie d'affinage multiplicatif, selon la formule :

$$V_k^{(j)} = f\left(\tilde{V}_k^{(j)}, F_k^{(j)}\right) = \tilde{V}_k^{(j)} F_k^{(j)}$$

5. Méthode selon la revendication 4, **caractérisée en ce que** le précodeur global $V$ est un précodeur de diagonalisation par blocs, les transmetteurs ont de manière cumulée au moins autant d'antennes que les récepteurs, et affiner l'estimation $\tilde{V}^{(j)}$ du précodeur global $V$ consiste alors à optimiser l'ensemble $\left\{F_k^{(j)}\right\}$ des matrices d'affinage $F_k^{(j)}$ par rapport à l'ensemble $\left\{\tilde{V}_k^{(j)}\right\}$ des matrices $\tilde{V}_k^{(j)}$, ce qui est obtenu en appliquant une opération de décomposition en valeurs singulières selon la formule :

$$\widehat{H}_{[k]}^{(j)} = U_{[k]}^{(j)} \left[D_{[k]}^{(j)}, 0\right] \left[\tilde{V}'^{(j)}_{[k]}, \tilde{V}''^{(j)}_{k}\right]^{\dagger}$$

où $\widehat{H}_{[k]}^{(j)}$ représente une vue d'une estimation d'interférence de canal agrégée $\hat{H}_{[k]}$ pour le $k$-*ième* récepteur parmi les $K_r$ récepteurs de point de vue dudit *j-ième* transmetteur, avec :

$$H_{[k]} = \left[H_1^{\dagger}, \ldots, H_{k-1}^{\dagger}, H_{k+1}^{\dagger}, \ldots, H_{K_r}^{\dagger}\right]^{\dagger}$$

où $\tilde{V}_k^{(j)}$ est obtenu en sélectionnant, d'après une règle de sélection prédéfinie appliquée de manière similaire par chacun des transmetteurs, un ensemble prédéterminé de $N$ colonnes de la matrice $\tilde{V}''^{(j)}_{k}$ résultant de l'opération de décomposition en valeurs singulières, où chaque récepteur a une quantité $N$ d'antennes de réception.

6. Méthode selon la revendication 4, **caractérisée en ce que** le précodeur global $V$ est un précodeur de formation de faisceaux coordonné et conscient des interférences avec une forme diagonale par blocs, $K_t = K_r$, et chaque transmetteur a une quantité $M$ d'antennes de transmission égal à la quantité $N$ d'antennes de réception de chaque récepteur, chaque transmetteur communique uniquement avec un seul récepteur parmi les $K_r$ récepteurs de telle

sorte que $k = j$,

où une sous-matrice $W'_k$ telle que :

$$V_k = E_k W'_k$$

est calculée comme le vecteur propre de formation de faisceaux de la matrice de canal définie par $E_k^T \hat{H}^{(k)} E_k$, à partir d'une opération de décomposition en valeurs singulières appliquée à ladite matrice de canal définie par $E_k^T \hat{H}^{(k)} E_k$ comme suit :

$$E_k^T \hat{H}^{(k)} E_k = U'_k D'_k W'_k$$

où $E_k$ est défini par :

$$E_k = \left[ 0_{M \times (k-1)M} , I_{M \times M} , 0_{M \times (K_t - k)M} \right]^T$$

avec $0_{M \times (k-1)M}$ une sous-matrice $M \times (k - 1)M$ contenant uniquement des zéros, $0_{M \times (K_t-k)M}$ une sous-matrice $M \times (K_t - 1)M$ contenant uniquement des zéros, et $I_{M \times M}$ une sous-matrice identité de taille $M \times M$.

7. Méthode selon l'une quelconque des revendications 1 à 3, **caractérisée en ce que** affiner l'estimation $\tilde{V}^{(j)}$ du précodeur global $V$ est effectué grâce à une fonction d'affinage $f(.,.)$, ainsi qu'un ensemble $\left\{ F_k^{(j)} \right\}$ de matrices d'affinage $F_k^{(j)}$, $k = 1$ à $K_r$, selon une stratégie d'affinage additif, selon la formule :

$$V_k^{(j)} = f\left( \tilde{V}_k^{(j)}, F_k^{(j)} \right) = \tilde{V}_k^{(j)} + F_k^{(j)}$$

8. Méthode selon la revendication 7, **caractérisée en ce que** le précodeur global $V$ est un précodeur régularisé à forçage nul, et l'estimation $\tilde{V}^{(j)}$ du précodeur global $V$ peut être exprimée selon la formule :

$$\tilde{V}_k^{(j)} = \left( \hat{H}^{(j)\dagger} \hat{H}^{(j)} + \alpha^{(j)} I \right)^{-1} \hat{H}_k^{(j)\dagger}$$

où $\alpha^{(j)}$ est un scalaire représentant un coefficient de régularisation qui est optimisé d'après les statistiques de la propre vue $\hat{H}^{(j)}$ du canal MIMO global $H$ du point de vue dudit $j$-*ième* transmetteur, et où $\alpha^{(j)}$ est partagé par ledit $j$-*ième* transmetteur avec les autres transmetteurs parmi les $K_t$ transmetteurs.

9. Méthode selon l'une quelconque des revendications 1 à 8, **caractérisée en ce que** affiner l'estimation $\tilde{V}^{(j)}$ du précodeur global $V$ est effectué sous la contrainte de puissance suivante :

$$Trace\left( \left( f\left( \tilde{V}_k^{(j)}, F_k^{(j)} \right) \right)^{\dagger} f\left( \tilde{V}_k^{(j)}, F_k^{(j)} \right) \right) = N$$

où chaque receveur a une quantité $N$ d'antennes de réception.

10. Programme d'ordinateur **caractérisé en ce qu'**il comporte des instructions de code de programme qui peuvent être téléchargées dans un dispositif programmable pour implémenter la méthode selon l'une quelconque des revendications 1 à 9, lorsque les instructions de code de programme sont exécutées par le dispositif programmable.

**11.** Support de stockage d'information, **caractérisé en ce qu'**il stocke un programme d'ordinateur comportant des instructions de code de programme qui peuvent être téléchargées dans un dispositif programmable pour implémenter la méthode selon l'une quelconque des revendications 1 à 9, lorsque les instructions de code de programme sont exécutées par le dispositif programmable.

**12.** Dispositif pour effectuer des transmissions de données entre une pluralité de $K_t$ transmetteurs et une pluralité de $K_r$ récepteurs via un canal MIMO global $H = [H_1,...,H_{Kr}]$ d'un système de communication sans fil, en déterminant de façon distribuée des précodeurs à appliquer pour effectuer lesdites transmissions, lesdits précodeurs étant respectivement appliqués par lesdits transmetteurs et formant conjointement un précodeur global $V$, **caractérisé en ce que** ledit dispositif correspond à chaque *j-ième* transmetteur parmi la pluralité des $K_t$ transmetteurs et comporte :

- des moyens pour collecter des statistiques long terme sur les erreurs d'information d'état de canal au transmetteur, information CSIT, subies par chacun des $K_t$ transmetteurs par rapport au canal MIMO global $H$, les statistiques long-terme décrivant la variation aléatoire des erreurs d'information CSIT ;
- des moyens pour obtenir des données court terme relatives à l'information CSIT et construire sa propre vue $\hat{H}^{(j)}$ du canal MIMO global $H$ ;
- des moyens pour déterminer une estimation $\tilde{V}^{(j)}$ du précodeur global $V$ à partir des données court terme obtenues relatives à l'information CSIT ;

$$\tilde{V}^{(j)} = \left[ \tilde{V}_1^{(j)}, ..., \tilde{V}_{K_r}^{(j)} \right]$$

- des moyens pour affiner l'estimation $\tilde{V}^{(j)} = \left[ \tilde{V}_1^{(j)}, ..., \tilde{V}_{K_r}^{(j)} \right]$ du précodeur global $V$ en se basant sur les statistiques long terme sur les erreurs d'information CSIT collectées de sorte à obtenir un précodeur affiné

$$V^{(j)} = \left[ V_1^{(j)}, ..., V_{K_r}^{(j)} \right]$$

qui est une vue du précodeur global $V$ du point de vue dudit *j-ième* transmetteur, en se basant en outre sur sa vue propre $\hat{H}^{(j)}$ du canal MIMO global $H$, et en se basant en outre sur un facteur de mérite représentatif de la performance desdites transmissions à travers le canal MIMO global $H$ ; et
- des moyens pour transmettre les données en appliquant un précodeur qui est formé par une partie du précodeur affiné $V^{(j)}$ correspondant audit *j-ième* transmetteur parmi la pluralité des $K_t$ transmetteurs.

Fig. 1

Fig. 2

Exchanging long-term statistics about CSIT error ⌐ᒪ S301

Obtaining short-term CIST ⌐ᒪ S302

Determining a precoder according to the short-term CSIT ⌐ᒪ S303

Refining the precoder according to
the long-term statistics about CSIT error ⌐ᒪ S304

Performing transmissions using the refined precoder ⌐ᒪ S305

Fig. 3

Initializing $F_k^{(j)}$, for each $k$ ⌐ᒪ S401

Computing $B_k^{(j)}$, for each $k$ ⌐ᒪ S402

Refining $F_k^{(j)}$, for each $k$ ⌐ᒪ S403

S405

no ⟨ Converging? ⟩ yes → End

S404

Fig. 4

**REFERENCES CITED IN THE DESCRIPTION**

**Non-patent literature cited in the description**

- **P. DE KERRET et al.** Quantized Team Precoding: A Robust Approach for Network MIMO under General CSI Uncertainties. *IEEE 17th annual workshop on Signal Processing Advances in Wireless Communications,* 03 July 2016
- **R. FRITZSCHE et al.** Robust Sum Rate Maximization in the Multi-cell MU-MIMO downlink. *IEEE Wireless Communications and Networking Conference,* 2013
- **Q. LI et al.** Robust Regularized ZF in Decentralized Broadcast Channel with Correlated CSI Noise. *53rd Annual Allerton Conference on Communication, Control and Computing,* 2015
- **JI-WOONG CHOI et al.** Optimum pilot pattern for channel estimation in OFDM systems. *IEEE Transactions on Wireless Communications,* September 2005, vol. 4 (5), 2083-2088
- **QIANRUI LI et al.** A cooperative channel estimation approach for coordinated multipoint transmission networks. *IEEE International Conference on Communication Workshop (ICCW),* 08 June 2015, 94-99
- **RUI ZHANG.** Cooperative Multi-Cell Block Diagonalization with Per-Base-Station Power Constraints. *IEEE Journal on Selected Areas in Communications,* December 2010, vol. 28 (9), 1435-1445
- **CHAN-BYOUNG CHAE et al.** Interference Aware-Coordinated Beamforming in a Multi-Cell System. *IEEE Transactions on Wireless Communications,* October 2012, vol. 11 (10), 3692-3703
- **JUN ZHANG et al.** A large system analysis of cooperative multicell downlink system with imperfect CSIT. *IEEE International Conference on Communications (ICC),* 10 June 2012, 4813-4817
- **CHANGHO SUH et al.** Downlink Interference Alignment. *IEEE Transactions on Communications,* September 2011, vol. 59 (9), 2616-2626
- **Z. WANG et al.** Regularized Zero-Forcing for Multiantenna Broadcast Channels with User Selection. *IEEE Wireless Communications Letters,* April 2012, vol. 1 (2), 129-132